(19) Europäisches Patentamt / European Patent Office / Office européen des brevets

(11) **EP 4 521 540 B1**

(12) **EUROPEAN PATENT SPECIFICATION**

(45) Date of publication and mention of the grant of the patent:
**13.05.2026   Bulletin 2026/20**

(21) Application number: **24182885.4**

(22) Date of filing: **18.06.2024**

(51) International Patent Classification (IPC):
$H01M\ 50/431^{(2021.01)}$   $H01M\ 10/0562^{(2010.01)}$
$H01M\ 4/136^{(2010.01)}$   $H01M\ 10/0525^{(2010.01)}$
$H01M\ 50/446^{(2021.01)}$   $H01M\ 4/66^{(2006.01)}$
$H01M\ 4/133^{(2010.01)}$   $H01M\ 4/134^{(2010.01)}$

(52) Cooperative Patent Classification (CPC):
H01M 10/0562; H01M 4/136; H01M 4/661;
H01M 4/667; H01M 4/668; H01M 10/0525;
H01M 50/431; H01M 50/446; H01M 4/133;
H01M 4/134; H01M 2300/0068; H01M 2300/0091;
Y02E 60/10

(54) **SOLID ELECTROLYTE SEPARATOR, ALL-SOLID SECONDARY BATTERY INCLUDING THE SAME, AND METHOD OF MANUFACTURING THE SOLID ELECTROLYTE SEPARATOR**

FESTELEKTROLYTSEPARATOR, FESTKÖRPERSEKUNDÄRBATTERIE DAMIT UND VERFAHREN ZUR HERSTELLUNG DES FESTELEKTROLYTSEPARATORS

SÉPARATEUR D'ÉLECTROLYTE SOLIDE, BATTERIE SECONDAIRE ENTIÈREMENT SOLIDE LE COMPRENANT ET PROCÉDÉ DE FABRICATION DU SÉPARATEUR D'ÉLECTROLYTE SOLIDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **08.09.2023   KR 20230119611**

(43) Date of publication of application:
**12.03.2025   Bulletin 2025/11**

(73) Proprietor: **Samsung SDI Co., Ltd.**
**Yongin-si, Gyeonggi-do 17084 (KR)**

(72) Inventors:
• **Park, Taehyun**
  17084 Yongin-si,Gyeonggi-do (KR)
• **Son, Inhyuk**
  17084 Yongin-si,Gyeonggi-do (KR)
• **Jo, Sungnim**
  17084 Yongin-si,Gyeonggi-do (KR)
• **Shim, Kyueun**
  17084 Yongin-si,Gyeonggi-do (KR)
• **Lee, Jieun**
  17084 Yongin-si,Gyeonggi-do (KR)
• **Lim, Hyungsub**
  17084 Yongin-si,Gyeonggi-do (KR)

(74) Representative: **Michalski Hüttermann & Partner Patentanwälte mbB**
**Kaistraße 16A**
**40221 Düsseldorf (DE)**

(56) References cited:
• **FUDONG HAN ET AL: "Suppressing Li Dendrite Formation in Li2S-P2S5 Solid Electrolyte by LiI Incorporation", ADVANCED ENERGY MATERIALS, vol. 8, no. 18, 12 March 2018 (2018-03-12), DE, pages 1703644, XP055644241, ISSN: 1614-6832, DOI: 10.1002/aenm.201703644**
• **YU CHUANG ET AL: "Superionic conductivity in lithium argyrodite solid-state electrolyte by controlled Cl-doping", NANO ENERGY, vol. 69, 1 March 2020 (2020-03-01), NL, pages 104396, XP093035217, ISSN: 2211-2855, DOI: 10.1016/j.nanoen.2019.104396**
• **TAKAHASHI MASAKUNI ET AL: "Investigation of the Suppression of Dendritic Lithium Growth with a Lithium-Iodide-Containing Solid Electrolyte", CHEMISTRY OF MATERIALS, vol. 33, no. 13, 15 June 2021 (2021-06-15), US, pages 4907 - 4914, XP093228524, ISSN: 0897-4756, DOI: 10.1021/acs.chemmater.1c00270**

**(Cont. next page)**

- **FUJITA YUSHI ET AL: "Li 2 S-LiI Solid Solutions with Ionic Conductive Domains for Enhanced All-Solid-State Li/S Batteries", vol. 5, no. 8, 2 August 2022 (2022-08-02), pages 9429 - 9436, XP093228578, ISSN: 2574-0962, Retrieved from the Internet <URL:https://pubs.acs.org/doi/pdf/10.1021/acsaem.2c00978> DOI: 10.1021/acsaem.2c00978**

- **TAKASHI HAKARI ET AL: "Li2S-Based Solid Solutions as Positive Electrodes with Full Utilization and Superlong Cycle Life in All-Solid-State Li/S Batteries", ADVANCED SUSTAINABLE SYSTEMS, WILEY, US, vol. 1, no. 6, 24 May 2017 (2017-05-24), pages n/a, XP072280958, ISSN: 2366-7486, DOI: 10.1002/ADSU.201700017**

## Description

### CROSS-REFERENCE TO RELATED APPLICATION

The present application claims priority to and the benefit of Korean Patent Application No. 10-2023-0119611, filed on September 8, 2023, in the Korean Intellectual Property Office.

### BACKGROUND

#### 1. Field

One or more embodiments of the present disclosure relate to a solid electrolyte separator, an all-solid secondary battery including the same, and a method of manufacturing the solid electrolyte separator.

#### 2. Description of the Related Art

Recently, in line with industrial progress, the development of batteries having high energy density and safety has been actively conducted. For example, lithium batteries are used in various applications, including information devices, communication devices, vehicles, and/or the like. Vehicles can have an effect on life, and thus, safety of batteries is an important consideration.

Lithium batteries employing liquid electrolytes can increase the risk of fire and/or explosion if a short circuit occurs. All-solid secondary batteries that employ solid electrolytes instead of liquid electrolytes have been proposed. Solid electrolytes are less likely to ignite than liquid electrolytes.

By employing a solid electrolyte in an all-solid secondary battery instead of a liquid electrolyte, the risk and/of fire or explosion can be reduced. All-solid batteries may provide improved safety.

FUDONGHAN ET AL: "Suppressing Li Dendrite Formation in Li 2S-P2S5 Solid Electrolyte by LiI Incorporation", ADVANCED ENERGY MATERIALS, vol. 8, no. 18, page 1703644 discloses a solid electrolyte separator comprising (100-x)(0.75Li2S - 0.25P2S5)-x LiI (x=0, 10, 20, 30, and 40) solid electrolytes synthesized using high-energy mechanical milling of Li2S, P2S5 and LiI as starting materials.

Furthermore, YU CHUANG ET AL: "Superionic conductivity in lithium argyrodite solid-state electrolyte by controlled CI-doping", NANO ENERGY, vol. 69, 1 March 2020 (2020-03-01), page 104396, discloses a solid electrolyte separator comprising Li 7-xPS6-xClx (x = 1.1, ...,1.8) solid electrolytes synthesized using high-energy mechanical milling of Li2S, P2S5 and LiCl as starting materials followed by annealing.

Additionally, TAKAHASHI MASAKUNI ET AL: "Investigation of the Suppression of Dendritic Lithium Growth with a Lithium-Iodide-Containing Solid Electrolyte", CHEMISTRY OF MATERIALS, vol. 33, no. 13, pages 4907-4914, discloses a solid electrolyte separator comprising (100-x)Li 3PS4-x-x LiI (x=0, 10, ... 60) solid electrolytes synthesized using high-energy mechanical milling of Li2S, P2S5 and LiI as starting materials followed by annealing.

FUJITA YUSHI ET AL: "Li 2S-LiI Solid Solutions with Ionic Conductive Domains for Enhanced All-Solid-State Li/S Batteries", ACS APPLIED ENERGY MATERIALS, vol. 5, no. 8, 2 August 2022 (2022-08-02), pages 9429-9436 discloses Li2S-LiI-based composites, either as such or with additional carbon conductive as cathode active material on a conventional Li3PS4 glass powder separator.

TAKASHI HAKARI ET AL: "Li 2S-Based Solid Solutions as Positive Electrodes with Full Utilization and Superlong Cycle Life in All-Solid-State Li/S Batteries", ADVANCED SUSTAINABLE SYSTEMS, WILEY, US, vol. 1, no. 6, page 1700017, discloses Li2S-LiX (X=I, Cl, Br) composites as cathode materials.

### SUMMARY

One or more embodiments of the present disclosure include a solid electrolyte separator having improved durability by including a composite of $Li_2S$ and a lithium salt.

One or more embodiments include an all-solid secondary battery including the solid electrolyte separator.

One or more embodiments include a method of manufacturing the solid electrolyte separator.

Additional aspects of embodiments will be set forth in part in the description which follows and, in part, will be apparent from the description, or may be learned by practice of the presented embodiments of the present disclosure.

According to one or more embodiments, a solid electrolyte separator includes:

a composite of $Li_2S$ and a lithium salt, and
a sulfide-based solid electrolyte,
wherein the composite of $Li_2S$ and the lithium salt is represented by $Li_2S\text{-}Li_aX_b$ where $1\leq a\leq5$ and $1\leq b\leq5$, and

X is I, Br, Cl, F, H, O, Se, Te, N, P, As, Sb, Al, B, OCI, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCI, $NCl_2$, $BN_2$, or a combination thereof.

According to one or more embodiments, an all-solid secondary battery includes:

a cathode, an anode, and a solid electrolyte layer between the cathode and the anode,
wherein the solid electrolyte layer includes the above-described solid electrolyte separator.

According to one or more embodiments, a method of manufacturing the sold electrolyte separator includes:

providing a composite of $Li_2S$ and a lithium salt,
providing a sulfide-based solid electrolyte,
mixing together the sulfide-based solid electrolyte and the composite of $Li_2S$ and the lithium salt to prepare a mixture, and
molding the mixture to prepare a solid electrolyte separator,
wherein the composite of $Li_2S$ and the lithium salt is represented by $Li_2S-Li_aX_b$ where $1{\leq}a{\leq}5$ and $1{\leq}b{\leq}5$, and
X is I, Br, Cl, F, H, O, Se, Te, N, P, As, Sb, Al, B, OCI, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCI, $NCl_2$, $BN_2$, or a combination thereof.

**BRIEF DESCRIPTION OF DRAWINGS**

The above and other aspects and features of certain embodiments of the present disclosure will be more apparent from the following description taken in conjunction with the accompanying drawings, in which:

FIG. 1 is a cross-sectional view of an all-solid secondary battery according to embodiments;
FIG. 2 is a cross-sectional view of an all-solid secondary battery according to embodiments;
FIG. 3 is a cross-sectional view of an all-solid secondary battery according to embodiments;
FIG. 4 is a cross-sectional view of an all-solid secondary battery according to embodiments; and
FIG. 5 is a cross-sectional view of an all-solid secondary battery according to embodiments.

**DETAILED DESCRIPTION**

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the drawings, to explain aspects of embodiments of the present description. As used herein, the term "and/or" includes any and all combinations of one or more of the associated listed items. Expressions such as "at least one of," if preceding a list of elements, modify the entire list of elements and do not modify the individual elements of the list.

Unless otherwise defined, all terms (including technical and scientific terms) used herein have the same meaning as commonly understood by those of ordinary skill in the art to which the present disclosure pertains. Also, terms, such as those defined in commonly used dictionaries, should be interpreted as having a meaning that is consistent with their meaning in the context of the related art and the present disclosure, and should not be interpreted in an idealized or overly formal sense.

Embodiments will be described herein with reference to schematic cross-sectional views of idealized embodiments. As such, variations from the shapes of illustrations as a result of, for example, manufacturing techniques and/or tolerances, may be expected. Thus, embodiments described herein should not be construed as being limited to shapes of regions illustrated herein but are to include deviations in shapes that result from, for example, manufacturing. For example, areas shown or described as flat may have rough and/or non-linear features. Moreover, angles shown as sharp may be rounded. Thus, the regions illustrated in the drawings are schematic in nature and their shapes may not illustrate the actual shape of a region and are not intended to limit the scope of the claims.

The subject matter of the present disclosure can be embodied in many different forms, and should not be construed as being limited to embodiments described herein. The embodiments are provided so that this disclosure will be thorough and complete, and will fully convey the scope of the present disclosure to those of ordinary skill in the art. Like reference numerals denote like elements.

It will be understood that, if an element is referred to as being "on" another element, it may be directly on the other element, or another element may be interposed therebetween. In contrast, if an element is referred to as being "directly on" another element, another element is not interposed therebetween.

Although the terms "first," "second," "third," and the like may be used herein to describe various elements, components, regions, layers, and/or sections, these elements, components, regions, layers, and/or sections should not be limited by these terms. These terms are only used to distinguish one element, component, region, layer or section from another element, component, region, layer or section. Thus, a first element, component, region, layer or section described below may be referred to as a second element, component, region, layer or section without departing from the teachings of the present disclosure.

The terms used herein are for describing only example embodiments and are not intended to limit the present disclosure. As used herein, "a", "an," and "the," do not denote a limitation of quantity, and are intended to include both the singular and plural, unless the context clearly indicates otherwise. For example, "an element" has the same meaning as "at least one element," unless the context clearly indicates otherwise. The singular form as used herein is intended to include the plural form including "at least one" unless the content clearly indicates otherwise. "At least one" should not be construed as being limited to the singular form. As used herein, the term "and/or" includes any and all combinations of one or more of the listed items. The terms "comprises" and/or "comprising," as used in the detailed description, specify the presence of stated features, regions, integers, steps, operations, elements, and/or components, but do not preclude the presence or addition of one or more other features, regions, integers, steps, operations, elements, components, and/or groups thereof.

Spatially relative terms such as "beneath," "under," "below," "on," "over," "above," and the like may be used herein to facilitate description of the relationship between one component or feature and another component or feature. It will be understood that spatially relative terms are intended to encompass different directions of a device in use or operation in addition to the directions shown in the drawings. For example, if the device in the drawings is turned over, a component described as "beneath" or "under" will be oriented "over" the other component or feature. Thus, the example term "below" may encompass both an upward direction and a downward direction. The device may be placed in different directions (rotated 90° or rotated in different directions), and spatially relative terms as used herein may be interpreted accordingly.

"Group" means a group of the Periodic Table of the Elements according to the International Union of Pure and Applied Chemistry ("IUPAC") Group 1-18 group classification system.

The term "particle size" or "particle diameter" as used herein refers to an average diameter of particles if the particles are spherical and refers to an average major axis length of particles if the particles are non-spherical. The particle diameter may be measured by using a particle size analyzer (PSA). "Particle size" or "particle diameter" may be, for example, an average particle diameter. The "average particle diameter" is D50, which is a median particle diameter.

D50 refers to the size of particles corresponding to a cumulative volume of 50% calculated from particles having the smallest particle size in the particle size distribution measured by a laser diffraction method.

D90 refers to the size of particles corresponding to a cumulative volume of 90% calculated from particles having the smallest particle size in the particle size distribution measured by, for example, a laser diffraction method.

D10 refers to the size of particles corresponding to a cumulative volume of 10% calculated from particles having the smallest particle size in the particle size distribution measured by, for example, a laser diffraction method.

"Metal" as used herein includes both metals and metalloids such as silicon and germanium, in elemental or ionic states.

The term "alloy" as used herein refers to a mixture of two or more metals.

The term "electrode active material" as used herein refers to an electrode material that can undergo lithiation and delithiation.

The term "cathode active material" as used herein refers to a cathode material that can undergo lithiation and delithiation.

The term "anode active material" as used herein refers to an anode material that can undergo lithiation and delithiation.

The terms "lithiation" and "lithiate" as used herein refer to a process of adding lithium to an electrode active material.

The terms "delithiation" and "delithiate" as used herein refer to a process of removing lithium from an electrode active material.

The terms "charging" and "charge" as used herein refer to a process of providing electrochemical energy to a battery.

The terms "discharging" and "discharge" as used herein refer to a process of removing electrochemical energy from a battery.

The term "positive electrode" and "cathode" as used herein refers to an electrode where electrochemical reduction and lithiation occur during a discharge process.

The term "negative electrode" and "anode" as used herein refers to an electrode where electrochemical oxidation and delithiation occur during a discharge process.

Hereinafter, a solid electrolyte separator according to embodiments, an all-solid secondary battery including the same, and a method of manufacturing the solid electrolyte separator will be described in more detail.

**Solid electrolyte separator**

**Solid electrolyte separator: composite of Li$_2$S and lithium salt**

A solid electrolyte separator according to one or more embodiments includes: a composite of Li$_2$S and a lithium salt; and a sulfide-based solid electrolyte.

Existing solid electrolyte separators may be manufactured by using, for example, solid electrolyte particles. An existing solid electrolyte separator includes pores, such as pinholes, between solid electrolyte particles. During charging and discharging processes of an all-solid secondary battery, lithium dendrites grow through these pinholes, causing the occurrence of defects such as cracks in a solid electrolyte separator. Lithium dendrites grow through these defects, causing the occurrence of a short circuit between a cathode and an anode. As a result, the cycle characteristics of the all-solid secondary battery may deteriorate. In an existing solid electrolyte separator, pinholes act as an insulator (e.g., an electrical insulator), and thus increase the internal resistance of the solid electrolyte separator. The pinholes also increase the interfacial resistance between the solid electrolyte separator and a cathode or an anode. As a result, the high-rate characteristics of an all-solid secondary battery including an existing solid electrolyte separator deteriorate.

In one or more embodiments, the solid electrolyte separator of the present disclosure may have improved durability by including the composite of Li$_2$S and the lithium salt. The composite of Li$_2$S and the lithium salt may have, for example, ductility. The composite of Li$_2$S and a lithium salt may act as a buffer material between sulfide-based solid electrolyte particles during a process of manufacturing the solid electrolyte separator. The composite of Li$_2$S and the lithium salt may suppress or reduce the formation of additional cracks and pores in the sulfide-based solid electrolyte particles due to collision/friction between the sulfide-based solid electrolyte particles. The composite of Li$_2$S and the lithium salt may easily fill the pores and/or interface between the sulfide-based solid electrolyte particles. In the solid electrolyte separator of the present disclosure, the formation of pores in the solid electrolyte separator may be suppressed or reduced and the composite of Li$_2$S and the lithium salt may be easily provided in the formed pores, and thus, the formation of pinholes in the solid electrolyte separator may be suppressed or reduced and the growth of lithium dendrites through these pinholes may be suppressed or reduced, resulting in improved durability of the solid electrolyte separator.

Due to having ductility, the composite of Li$_2$S and the lithium salt is distinguished from other oxide-based solid electrolytes having brittleness, for example, oxide-based solid electrolytes having a garnet structure. The composite of Li$_2$S and the lithium salt has lithium ion conductivity, and is thus distinguished from other lithium-free metal oxides having no lithium ion conductivity, such as alumina. The composite of Li$_2$S and the lithium salt may be, for example, a mechanical milling product of Li$_2$S and the lithium salt. The composite of Li$_2$S and the lithium salt may be, for example, a mechanochemical reaction product of Li$_2$S and the lithium salt, and is thus distinguished from a simple mixture of Li$_2$S and the lithium salt. The simple mixture of Li$_2$S and the lithium salt may provide high interfacial resistance by failing to maintain a compact interface between the Li$_2$S and the lithium salt, resulting in increased internal resistance of the solid electrolyte separator.

The composite of Li$_2$S and the lithium salt may be represented by Li$_2$S-Li$_a$X$_b$ where $1 \leq a \leq 5$ and $1 \leq b \leq 5$. X may be I, Br, Cl, F, H, O, Se, Te, N, P, As, Sb, Al, B, OCl, PF$_6$, BF$_4$, SbF$_6$, AsF$_6$, ClO$_4$, AlO$_2$, AlCl$_4$, NO$_3$, CO$_3$, BH$_4$, SO$_4$, BO$_3$, PO$_4$, NCl, NCl$_2$, BN$_2$, or a combination thereof. The variable "a" may be, for example, 1, 2, 3, 4, or 5. The variable "b" may be, for example, 1, 2, 3, 4, or 5.

The lithium salt may be a sulfur (S)-free compound. The lithium salt may be, for example, a binary compound or a ternary compound. For example, the lithium salt may be a binary compound including or consisting of lithium and one element selected from Groups 13 to 17 of the Periodic Table of Elements. For example, the lithium salt may be a ternary compound including or consisting of lithium and two elements selected from Groups 13 to 17 of the Periodic Table of Elements. The binary compound may include, for example, LiI, LiBr, LiCl, LiF, LiH, Li$_2$O, Li$_2$Se, Li$_2$Te, Li$_3$N, Li$_3$P, Li$_3$As, Li$_3$Sb, Li$_3$Al$_2$, LiB$_3$, or a combination thereof. The composite may have further improved ionic conductivity by including such a binary compound. The solid electrolyte separator may have further reduced internal resistance by including the composite. As a result, the cycle characteristics of an all-solid secondary battery including the solid electrolyte separator may be further improved. The ternary compound may include, for example, Li$_3$OCl, LiPF$_6$, LiBF$_4$, LiSbF$_6$, LiAsF$_6$, LiClO$_4$, LiAlO$_2$, LiAlCl$_4$, LiNO$_3$, Li$_2$CO$_3$, LiBH$_4$, Li$_2$SO$_4$, Li$_3$BO$_3$, Li$_3$PO$_4$, Li$_4$NCl, Li$_5$NCl$_2$, Li$_3$BN$_2$, or a combination thereof. The composite may have further improved ionic conductivity by including such a ternary compound. The solid electrolyte separator may have further reduced internal resistance by including the composite. As a result, the cycle characteristics of an all-solid secondary battery including the solid electrolyte separator may be further improved.

The composite of Li$_2$S and the lithium salt may include, for example, a solid solution of Li$_2$S and the lithium salt. The composite of Li$_2$S and the lithium salt may have increased ionic conductivity by including the solid solution of Li$_2$S and the lithium salt. For example, by including lithium ions in Li$_2$S crystallites in the solid solution of Li$_2$S and the lithium salt, the solid solution of Li$_2$S and the lithium salt may have improved ionic conductivity compared to Li$_2$S. As a result, the ionic conductivity of the composite of Li$_2$S and a lithium salt may be improved, and the internal resistance of the composite of Li$_2$S and the lithium salt may be reduced. The solid electrolyte separator may have further reduced internal resistance by including the composite. As a result, the cycle characteristics of an all-solid secondary battery including the solid electrolyte separator may be further improved. The term "composite" as used herein refers to a material that is not a simple mixture of components thereof but a resultant of mechanochemical reaction of components thereof. Components of the composite for example may form a chemical bond therebetween. Composite for example contains addition phase different from components of the composite.

The size of $Li_2S$ crystallites obtained from an XRD spectrum of the composite of $Li_2S$ and the lithium salt may be, for example, 20 nm or less, 15 nm or less, or 10 nm or less. The size of $Li_2S$ crystallites obtained from an XRD spectrum of the composite of $Li_2S$ and the lithium salt may be in a range of, for example, about 1 nm to about 20 nm, about 1 nm to about 15 nm, or about 3 nm to about 10 nm. As the size of $Li_2S$ crystallites decreases, the contact area between $Li_2S$ and the lithium salt may be further increased. As the contact area between $Li_2S$ and the lithium salt further increases, the ionic conductivity of the composite of $Li_2S$ and the lithium salt may be further increased. The solid electrolyte separator may have further reduced internal resistance by including the composite. As a result, the cycle characteristics of an all-solid secondary battery including the solid electrolyte separator may be further improved.

The composite of $Li_2S$ and the lithium salt may have a smaller Mohs hardness than the lithium salt (e.g., than the lithium salt on its own). The composite of $Li_2S$ and the lithium salt may have improved ductility compared to the lithium salt (e.g., compared to the lithium salt on its own). Due to the improved ductility of the composite of $Li_2S$ and the lithium salt, the formation of pinholes in the solid electrolyte separator may be more effectively suppressed or reduced in manufacturing the solid electrolyte separator. As a result, the solid electrolyte separator including the composite of $Li_2S$ and the lithium salt may have further improved durability. The Mohs hardness of the composite of $Li_2S$ and the lithium salt may be, for example, less than 2, 1.5 or less, 1 or less, or 0.7 or less and, for example, may be 0.01 or more. If the Mohs hardness of the composite of $Li_2S$ and the lithium salt increases excessively, it may be difficult to suppress or reduce the formation of pinholes in the solid electrolyte separator due to difficulty in providing ductility. The Mohs hardness of $Li_2S$ may be, for example, 0.6. The Mohs hardness of the lithium salt may be 0.7 or more, 0.8 or more, 0.9 or more, 1.0 or more, 1.5 or more, or 2.0 or more. If the Mohs hardness of the lithium salt is within the above ranges, $Li_2S$ may be more easily pulverized in a milling process, and the solid solution of $Li_2S$ and the lithium salt may be more easily formed. The Mohs hardness of Lil may be, for example, 2.0.

$Li_2S$ has low ionic conductivity. Thus, to address these properties, a composite of $Li_2S$ and the lithium salt is formed. The composite of $Li_2S$ and the lithium salt may provide improved ionic conductivity, compared to $Li_2S$ alone. The amount of $Li_2S$ in the composite of $Li_2S$ and the lithium salt may be in a range of about 50 wt% to about 95 wt%, about 50 wt% to about 90 wt%, about 50 wt% to about 80 wt%, or about 50 wt% to about 70 wt%, with respect to a total weight of the composite of $Li_2S$ and the lithium salt. If the amount of $Li_2S$ in the composite of $Li_2S$ and the lithium salt is within the above ranges, the composite of $Li_2S$ and the lithium salt may concurrently (e.g., simultaneously) provide improved ionic conductivity and excellent ductility. As a result, the solid electrolyte separator including the composite of $Li_2S$ and the lithium salt may have improved durability. The amount of the lithium salt in the composite of $Li_2S$ and the lithium salt may be in a range of about 5 wt% to about 50 wt%, about 10 wt% to about 50 wt%, about 20 wt% to about 50 wt%, or about 30 wt% to about 50 wt%, with respect to the total weight of the composite of $Li_2S$ and the lithium salt. If the amount of the lithium salt in the composite of $Li_2S$ and the lithium salt is within the above ranges, the composite of $Li_2S$ and the lithium salt may concurrently (e.g., simultaneously) provide improved ionic conductivity and excellent ductility. As a result, the solid electrolyte separator including the composite of $Li_2S$ and the lithium salt may have improved durability.

For example, the amount of $Li_2S$ in the composite of $Li_2S$ and the lithium salt may be larger than the amount of the lithium salt. In the composite of $Li_2S$ and the lithium salt, a molar ratio of $Li_2S$ to the lithium salt may be in a range of, for example, about 51:49 to about 95:5, about 55:45 to about 90:10, about 60:40 to about 90:10, or about 70:30 to about 90:10. If the molar ratio of $Li_2S$ to the lithium salt in the composite of $Li_2S$ and the lithium salt is within the above ranges, the composite of $Li_2S$ and the lithium salt may concurrently (e.g., simultaneously) provide improved ionic conductivity and excellent ductility. As a result, the solid electrolyte separator including the composite of $Li_2S$ and the lithium salt may have improved durability.

The composite of $Li_2S$ and the lithium salt may have, for example, an ionic conductivity of $1 \times 10^{-5}$ S/cm or more, $2 \times 10^{-5}$ S/cm or more, $4 \times 10^{-5}$ S/cm or more, $6 \times 10^{-5}$ S/cm or more, $8 \times 10^{-5}$ S/cm or more, or $1 \times 10^{-4}$ S/cm or more, and, for example, $1 \times 10^{-2}$ S/cm or less, at 25 °C. The ionic conductivity may be measured by using, for example, electrochemical impedance spectroscopy, a direct current (DC) polarization method, and/or the like. If the ionic conductivity of the composite of $Li_2S$ and the lithium salt is within the above ranges, the internal resistance of the solid electrolyte separator including the composite of $Li_2S$ and the lithium salt may be further reduced. The cycle characteristics of an all-solid secondary battery including the solid electrolyte separator may be improved.

The amount of the composite of $Li_2S$ and the lithium salt may be in a range of, for example, about 0.1 wt% to about 20 wt%, about 0.5 wt% to about 20 wt%, about 0.5 wt% to about 15 wt%, about 0.5 wt% to about 10 wt%, or about 1 wt% to about 5 wt%, with respect to a total weight of the composite of $Li_2S$ and the lithium salt and the sulfide-based solid electrolyte. The amount of the composite of $Li_2S$ and the lithium salt may be in a range of, for example, about 0.1 wt% to about 20 wt%, about 0.5 wt% to about 20 wt%, about 0.5 wt% to about 15 wt%, about 0.5 wt% to about 10 wt%, or about 1 wt% to about 5 wt%, with respect to a total weight of the solid electrolyte separator. If the amount of the composite of $Li_2S$ and the lithium salt in the solid electrolyte separator is within the above ranges, the solid electrolyte separator may have further improved durability and further reduced internal resistance. If the amount of the composite of $Li_2S$ and the lithium salt is too small, the effect may be insignificant. If the amount of the composite of $Li_2S$ and the lithium salt is too large, the solid electrolyte separator may have increased internal resistance.

The solid electrolyte separator may include, for example, composite particles of $Li_2S$ and the lithium salt and sulfide-based solid electrolyte particles. For example, the size of the composite particles of $Li_2S$ and the lithium salt may be smaller than the size of the sulfide-based solid electrolyte particles. The size of the composite particles of $Li_2S$ and the lithium salt may be, for example, 90% or less, 80% or less, 60% or less, 40% or less, 20% or less, or 10% or less, and, for example, may be 1% or more of the size of the sulfide-based solid electrolyte particles. For example, the composite particles of $Li_2S$ and the lithium salt may be provided in pores between a plurality of sulfide-based solid electrolyte particles. Due to the arrangement of the composite particles of $Li_2S$ and the lithium salt in pores between the plurality of sulfide-based solid electrolyte particles, the formation of pinholes in the solid electrolyte separator may be suppressed or reduced, and the internal resistance of the solid electrolyte separator may be reduced. As a result, the solid electrolyte separator may have improved durability.

The solid electrolyte separator may have a porosity of 8% or less, 7% or less, 5% or less, 3% or less, 2% or less, or 1% or less. The porosity of the solid electrolyte separator may be in a range of about 0.01% to about 8%, about 0.05% to about 7%, about 0.1% to about 5%, about 0.1% to about 3%, about 0.1% to about 2%, or about 0.1% to about 1%. If the solid electrolyte separator has a porosity of 10% or less, the internal resistance of the solid electrolyte separator may be reduced, and the growth of lithium dendrites may be more effectively suppressed or reduced. As a result, the solid electrolyte separator may have improved durability. The porosity of the solid electrolyte separator may be measured by using, for example, a method of calculating the area of pores from a mapping image of the cross-section of the solid electrolyte separator through ultrasonic analysis, a method of calculating the area of pores from an electron microscope image of the cross-section of the solid electrolyte separator, and/or the like.

The size of the sulfide-based solid electrolyte particles may be in a range of, for example, about 1 $\mu$m to about 10 $\mu$m, about 1 $\mu$m to about 8 $\mu$m, about 1 $\mu$m to about 6 $\mu$m, about 1 $\mu$m to about 5 $\mu$m, or about 1 $\mu$m to about 3 $\mu$m. If the size of the sulfide-based solid electrolyte particles is within the above ranges, the durability of the solid electrolyte separator may be further improved. The size of the sulfide-based solid electrolyte particles may be measured by using, for example, laser diffraction, a scanning electron microscope, and/or the like. The size of the sulfide-based solid electrolyte particles may be, for example, an arithmetic mean value of the particle diameters of a plurality of particles, as measured by using software in a scanning electron microscope image.

The size of the composite particles of $Li_2S$ and the lithium salt may be, for example, 2 $\mu$m or less, 1.5 $\mu$m or less, or 1 $\mu$m or less. The size of the composite particles of $Li_2S$ and the lithium salt may be in a range of, for example, about 0.1 $\mu$m to about 2 $\mu$m, about 0.1 $\mu$m to about 1.5 $\mu$m, or about 0.1 $\mu$m to about 1 $\mu$m. If the size of the composite particles of $Li_2S$ and the lithium salt is within the above ranges, the composite particles of $Li_2S$ and the lithium salt may be more easily provided in pores between a plurality of sulfide-based solid electrolyte particles, the formation of pinholes in the solid electrolyte separator may be suppressed or reduced, and the internal resistance of the solid electrolyte separator may be reduced. As a result, the solid electrolyte separator may have improved durability. The size of the composite particles of $Li_2S$ and the lithium salt may be measured by using, for example, laser diffraction, a scanning electron microscope, and/or the like. The size of the composite particles of $Li_2S$ and the lithium salt may be, for example, an arithmetic mean value of the particle diameters of a plurality of particles, as measured by using software in a scanning electron microscope image.

The size of $Li_2S$ particles included in the composite of $Li_2S$ and the lithium salt may be, for example, 2 $\mu$m or less, 1.5 $\mu$m or less, or 1 $\mu$m or less. The size of $Li_2S$ particles may be in a range of, for example, about 0.1 $\mu$m to about 2 $\mu$m, about 0.1 $\mu$m to about 1.5 $\mu$m, or about 0.1 $\mu$m to about 1 $\mu$m. If the size of the $Li_2S$ particles is within the above ranges, the internal resistance of the solid electrolyte separator may be further reduced.

A ratio of the size of the sulfide-based solid electrolyte particles to the size of the composite particles of $Li_2S$ and the lithium salt may be in a range of, for example, about 2:1 to about 200:1, about 2:1 to about 100:1, or about 2:1 to about 50:1. Due to having the ratio thereof within the above ranges, the generation of defects in the solid electrolyte separator may be suppressed or reduced, and the durability of the solid electrolyte separator may be further improved. If the ratio of the size of the sulfide-based solid electrolyte particles to the size of the composite particles of $Li_2S$ and the lithium salt is too small, the porosity of the solid electrolyte separator may increase excessively, resulting in deteriorated durability of the solid electrolyte separator. If the ratio of the size of the sulfide-based solid electrolyte particles to the size of the composite particles of $Li_2S$ and the lithium salt is too large, it may be difficult to uniformly disperse the composite particles of $Li_2S$ and the lithium salt in the solid electrolyte separator.

**Solid electrolyte separator: sulfide-based solid electrolyte**

The solid electrolyte separator may include a sulfide-based solid electrolyte. The sulfide-based solid electrolyte may be, for example, at least one selected from $Li_2S-P_2S_5$, $Li_2S-P_2S_5$-LiX where X is a halogen element, $Li_2S-P_2S_5-Li_2O$, $Li_2S-P_2S_5-Li_2O$-LiI, $Li_2S-SiS_2$, $Li_2S-SiS_2$-LiI, $Li_2S-SiS_2$-LiBr, $Li_2S-SiS_2$-LiCl, $Li_2S-SiS_2-B_2S_3$-LiI, $Li_2S-SiS_2-P_2Ss$-LiI, $Li_2S-B_2S_3$, $Li_2S-P_2S_5-Z_mS_n$ where m and n are positive numbers and Z is Ge, Zn, or Ga, $Li_2S-GeS_2$, $Li_2S-SiS_2-Li_3PO_4$, $Li_2S-SiS_2-Li_pMO_q$ where p and q are positive numbers and M is one selected from P, Si, Ge, B, Al, Ga, and In, $Li_{7-x}PS_{6-x}Cl_x$ where $0 \leq x \leq 2$, $Li_{7-x}PS_{6-x}Br_x$ where $0 \leq x \leq 2$, and $Li_{7-x}PS_{6-x}I_x$ where $0 \leq x \leq 2$. The sulfide-based solid electrolyte may be prepared by, for example, treating starting materials such as $Li_2S$, $P_2S_5$, and/or the like by melting quenching, mechanical milling, and/or the like. In other embodiments, after such treatment, heat treatment may be performed. The sulfide-based solid electrolyte may be amorphous or crystalline, or in a mixed state. The sulfide-based solid electrolyte may include, for example, at least sulfur (S), phosphorus (P), and lithium (Li) as constituent elements. The sulfide-based solid electrolyte may include, for example, $Li_2S-P_2S_5$. If a material including $Li_2S-P_2S_5$ is used as the sulfide-based solid electrolyte, a mixing molar ratio of $Li_2S$ to $P_2S_5$ may be in a range of, for example, about 20:80 to about 90:10, about 25:75 to about 90:10, about 30:70 to about 70:30, or about 40:60 to about 60:40.

The sulfide-based solid electrolyte may include, for example, an argyrodite-type solid electrolyte (e.g., a solid electrolyte having an argyrodite crystal structure) represented by Formula 1:

$$\text{Formula 1} \qquad Li^+_{12-n-x}A^{n+}X^{2-}_{6-x}Y^-_x$$

wherein, in Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, $1 \leq n \leq 5$, and $0 \leq x \leq 2$. The sulfide-based solid electrolyte may be, for example, an argyrodite-type compound (e.g., a compound having an argyrodite crystal structure) including at least one selected from $Li_{7-x}PS_{6-x}Cl_x$ where $0 \leq x \leq 2$, $Li_{7-x}PS_{6-x}Br_x$ where $0 \leq x \leq 2$, and $Li_{7-x}PS_{6-x}I_x$ where $0 \leq x \leq 2$. The sulfide-based solid electrolyte may be, for example, an argyrodite-type (e.g., a compound having an argyrodite crystal structure) compound including at least one selected from $Li_6PS_5Cl$, $Li_6PS_5Br$, and $Li_6PS_5I$.

The argyrodite-type solid electrolyte (e.g., the solid electrolyte having an argyrodite crystal structure) may have a density of about 1.5 g/cc to about 2.0 g/cc. Due to having the density thereof within the above range, the internal resistance of an all-solid secondary battery may be reduced, and penetration of the solid electrolyte separator by lithium may be more effectively suppressed or reduced.

**Solid electrolyte separator: binder**

The solid electrolyte separator may further include a binder. The binder included in the solid electrolyte separator may be, for example, styrene-butadiene rubber (SBR), polytetrafluoroethylene, polyvinylidene fluoride, polyethylene, and/or the like, but the present disclosure is not limited thereto and any suitable binder used in the art may be used as the binder. The binder of the solid electrolyte separator may be equal to or different from binders used in a cathode active material layer and an anode active material layer. The binder may be omitted.

The amount of the binder included in the solid electrolyte separator may be in a range of, for example, about 0.1 wt% to about 10 wt%, about 0.1 wt% to about 5 wt%, about 0.1 wt% to about 3 wt%, or about 0.1 wt% to about 2 wt%, with respect to the total weight of the solid electrolyte separator.

**Solid electrolyte separator: other components**

The solid electrolyte separator may be free of a carbon-based conductive material. The solid electrolyte separator may not include, for example, a carbon-based conductive material such as graphite, carbon black, carbon nanotubes, carbon nanofibers, or the like. Due to not including a carbon-based conductive material, the solid electrolyte separator may provide high electronic insulation. Due to not including a carbon-based conductive material in the solid electrolyte separator, the possibility of a short circuit between a cathode and an anode may be more effectively prevented or reduced. The solid electrolyte separator may also not include a metal-based conductive material (e.g., may be substantially free, free, or completely free of a metal-based conductive material).

The solid electrolyte separator may be, for example, a self-standing film (e.g., a self-supporting film). The solid electrolyte separator may maintain its membrane form without a support. The solid electrolyte separator may be, for example, in the form of a sheet. If the solid electrolyte separator is a self-standing film, an all-solid secondary battery including the solid electrolyte separator may be more easily assembled.

In some embodiments, the solid electrolyte separator may have a curvature greater than 0 (e.g., greater than 0 degrees). For example, the solid electrolyte separator may be bendable. The solid electrolyte separator has ductility by including the sulfide-based solid electrolyte and the composite of $Li_2S$ and the lithium salt, and thus may be bent and/or deformed. Therefore, it may be possible to effectively accommodate a change in the volume of a cathode and/or an anode during charging and discharging processes of an all-solid secondary battery, and effectively prevent or reduce the formation of cracks and/or the like in the solid electrolyte separator.

A solid electrolyte separator consisting of an oxide-based solid electrolyte has brittleness, and thus is difficult to bend and have a curvature exceeding 0 (e.g., exceeding 0 degrees). For example, the solid electrolyte separator consisting of an oxide-based solid electrolyte may be cut or broken by cracks without bending due to uneven internal stress caused by a change in the volume of a cathode and/or an anode during charging and discharging processes of an all-solid secondary battery.

## All-solid secondary battery

An all-solid secondary battery according to one or more embodiments includes: a cathode; an anode; and a solid electrolyte layer between the cathode and the anode, in which the solid electrolyte layer includes the above-described solid electrolyte separator.

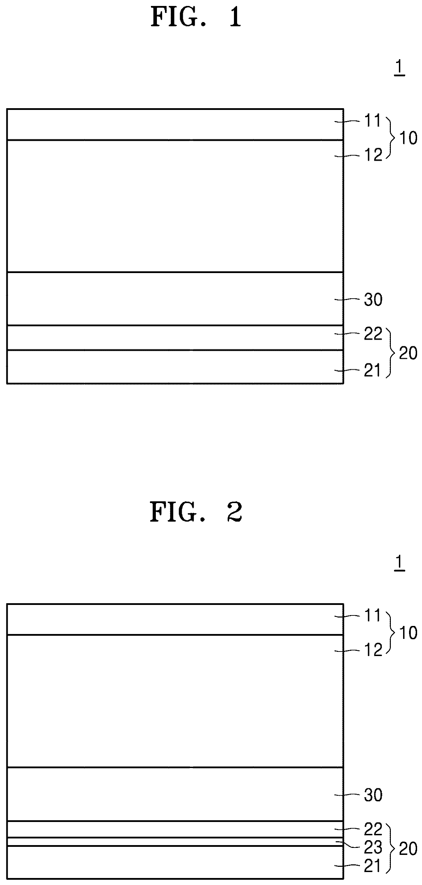

Referring to FIGS. 1-5, an all-solid secondary battery 1 includes: a cathode 10; an anode 20; and a solid electrolyte layer 30 between the cathode 10 and the anode 20. The solid electrolyte layer 30 includes the solid electrolyte separator.

## Cathode

## Cathode: cathode active material

Referring to FIGS. 1-5, the cathode 10 includes: a cathode current collector 11; and a cathode active material layer 12 on one or both surfaces of the cathode current collector 11. The cathode active material layer 12 may include a cathode active material.

The cathode active material included in the cathode active material layer 12 may be a cathode active material capable of reversibly absorbing and desorbing lithium ions. The cathode active material may include, for example, a sulfide-based cathode active material, an oxide-based cathode active material, or a combination thereof.

The sulfide-based cathode active material may include, for example, nickel sulfide, copper sulfide, $Li_2S$, a $Li_2S$-containing composite, or a combination thereof.

The oxide-based cathode active material may include, for example, a lithium transition metal oxide, a metal oxide, or a combination thereof. The lithium transition metal oxide may include, for example, lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof. The metal oxide may include, for example, iron oxide, vanadium oxide, or a combination thereof.

The sulfide-based cathode active material may include, for example, a $Li_2S$-containing composite. The $Li_2S$-containing composite may include, for example, a composite of $Li_2S$ and carbon, a composite of $Li_2S$, carbon, and a solid electrolyte, a composite of $Li_2S$ and a solid electrolyte, a composite of $Li_2S$, the lithium salt, and carbon, a composite of $Li_2S$ and a metal carbide, a composite of $Li_2S$, carbon, and a metal carbide, a composite of $Li_2S$ and a metal nitride, a composite of $Li_2S$, carbon, and a metal nitride, or a combination thereof.

The composite of $Li_2S$ and carbon may include carbon. The carbon may be, for example, any suitable material containing carbon atoms that may be used as a conductive material (e.g., an electrically conductive material) in the art. The carbon may be, for example, crystalline carbon, amorphous carbon, or a combination thereof. The carbon may be, for example, a fired and/or sintered product of a carbon precursor. The carbon may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, carbon nanotubes, carbon nanofibers, carbon nanobelts, carbon nanorods, graphene, graphene oxide (GO), reduced graphene oxide (rGO), a graphene ball (GB), or a combination thereof. The carbon may be, for example, porous carbon and/or non-porous carbon. The porous carbon may include, for example, periodic and ordered two-dimensional and/or three-dimensional pores. The porous carbon may be, for example, carbon black such as Ketjen black, acetylene black, Denka black, thermal black, channel black, and/or the like, graphite, activated carbon, or a combination thereof. The carbon may be in the form of, for example, particles, a sheet, a flake, and/or the like, but the present disclosure is not limited thereto and any suitable carbon that may be used in the art may be used as the carbon. A method of preparing the composite of $Li_2S$ and carbon may be, but is not limited to, a dry method, a wet method, and/or the like. The preparation method of the composite of $Li_2S$ and carbon, used in the art may be, for example, milling, heat treatment, deposition, and/or the like, but the present disclosure is not limited thereto and any suitable method used in the art may be used.

The composite of $Li_2S$, carbon, and a solid electrolyte may include carbon and a solid electrolyte. The carbon may be the same as described above with respect to the composite of $Li_2S$ and carbon. The solid electrolyte may be, for example, any suitable amorphous solid electrolyte that may be used as an ion conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, lithium (Li), sulfur (S), and phosphorus (P), and may optionally further include a halogen element. The sulfide-based solid electrolyte may be selected from sulfide-based solid electrolytes used in the solid electrolyte layer. For example, the sulfide-based solid electrolyte may have an ionic conductivity of $1 \times 10^{-5}$ S/cm or greater at room temperature. The sulfide-based solid electrolyte may include, for example, at least one selected from $Li_3PO_4$-$Li_2SO_4$, $Li_2S$-$P_2S_5$, $Li_2S$-$P_2S_5$-LiX where X is a halogen element, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2Ss$-LiI, $Li_2S$-$B_2S_3$, $Li_2S$-$P_2S_5$-$Z_mS_n$ where m and n are positive numbers and Z is Ge, Zn, or Ga, $Li_2S$-$GeS_2$, $Li_2S$-$SiS_2$-$Li_3PO_4$, $Li_2S$-$SiS_2$-$Li_pMO_q$ where p and q are positive numbers and M is one selected from P, Si, Ge, B, Al, Ga, and In, $Li_{7-x}PS_{6-x}Cl_x$ where $0 \leq x \leq 2$, $Li_{7-x}PS_{6-x}Br_x$ where $0 \leq x \leq 2$, and $Li_{7-x}PS_{6-x}I_x$ where $0 \leq x \leq 2$. The oxide-based solid electrolyte may include, for example, Li, oxygen (O), and a transition metal element, and may optionally further include other elements. For example, the oxide-based solid electrolyte may be a solid electrolyte having an ionic conductivity of $1 \times 10^{-5}$ S/cm or more, and, for example, $1 \times 10^{-2}$ S/cm or less, at room temperature. The oxide-based solid electrolyte may be selected from oxide-based solid electrolytes used in the solid electrolyte layer. The solid electrolyte may be, for example, a mixture of a sulfide-based solid electrolyte and the lithium salt. For example, the solid electrolyte may be a mixture of $Li_3PO_4$-$Li_2SO_4$ and a binary lithium salt or a mixture of $Li_3PO_4$-$Li_2SO_4$ and a ternary lithium salt.

The composite of $Li_2S$ and a solid electrolyte may include a solid electrolyte. The solid electrolyte may be the same as described above with respect to the composite of $Li_2S$, carbon and a solid electrolyte.

The composite of $Li_2S$, the lithium salt, and carbon may include a lithium salt compound and carbon. The lithium salt compound may not contain, for example, a sulfur (S) atom. For example, the lithium salt compound may be a binary compound consisting of lithium and one element selected from Groups 13 to 17 of the Periodic Table of Elements. The binary compound may include, for example, at least one selected from LiF, LiCl, LiBr, LiI, LiH, $Li_2S$, $Li_2O$, $Li_2Se$, $Li_2Te$, $Li_3N$, $Li_3P$, $Li_3As$, $Li_3Sb$, $LiI_3$, and LiBs. For example, the lithium salt compound may be a ternary compound consisting of lithium and two elements selected from Groups 13 to 17 of the Periodic Table of Elements. The ternary compound may include, for example, at least one selected from $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, and $Li_3BN_2$. The lithium salt compound may be, for example, at least one lithium halide compound selected from LiF, LiCl, LiBr, and LiI. The carbon may be the same as described above with respect to the composite of $Li_2S$ and carbon. The composite of $Li_2S$ and a metal carbide may include a metal carbide. The metal carbide may be, for example, a two-dimensional metal carbide. The two-dimensional metal carbide may be, for example, Mxene. The two-dimensional metal carbide may be represented by, for example, $M_{n+1}C_nT_x$ wherein M is a transition metal, T is an end group, T is O, OH, and/or F, n=1, 2, or 3, and x is the number of the end groups. The two-dimensional metal carbide may be, for example, $Ti_2CT_x$, $(Ti_{0.5}, Nb_{0.5})_2CT_x$, $Nb_2CT_x$, $V_2CT_x$, $Ti_3C_2T_x$, $(V_{0.5}, Cr_{0.5})_3C_2T_x$, $Ti_3CNT_x$, $Ta_4C_3T_x$, $Nb_4C_3T_x$, or a combination thereof. The surface of the two-dimensional metal carbide may be terminated with O, OH, and/or F.

The composite of $Li_2S$, carbon, and a metal carbide may include carbon and a metal carbide. The carbon may be the same as described above with respect to the composite of $Li_2S$ and carbon. The metal carbide may be the same as described above with respect to the composite of $Li_2S$ and a metal carbide.

The composite of $Li_2S$ and a metal nitride may include a metal nitride. The metal nitride may be, for example, a two-dimensional metal nitride. The two-dimensional metal nitride may be represented by, for example, $M_{n+1}N_nT_x$ wherein M is a transition metal, T is an end group, T is O, OH, and/or F, n=1, 2, or 3, and x is the number of the end groups). The surface of the two-dimensional metal nitride may be terminated with O, OH, and/or F.

The composite of $Li_2S$, carbon, and a metal nitride may include carbon and a metal nitride. The carbon may be the same as described above with respect to the composite of $Li_2S$ and carbon. The metal nitride may be the same as described above with respect to the composite of $Li_2S$ and a metal nitride.

The size of the sulfide-based cathode active material (e.g., the size of particles of the sulfide-based cathode active material) may be in a range of, for example, about 0.1 $\mu$m to about 50 $\mu$m, about 0.5 $\mu$m to about 30 $\mu$m, about 0.5 $\mu$m to about 20 $\mu$m, or about 1 $\mu$m to about 10 $\mu$m. The size of $Li_2S$ (e.g., the size of particles of $Li_2S$) may be in a range of, for example, about 1 nm to about 10 $\mu$m, about 10 nm to about 5 $\mu$m, about 10 nm to about 3 $\mu$m, or about 10 nm to about 1 $\mu$m. The size of the $Li_2S$-containing composite (e.g., the size of particles of the $Li_2S$-containing composite) may be in a range of, for example, about 0.1 $\mu$m to about 50 $\mu$m, about 0.5 $\mu$m to about 30 $\mu$m, about 0.5 $\mu$m to about 20 $\mu$m, or about 1 $\mu$m to about 10 $\mu$m.

The oxide-based cathode active material may be, for example, at least one selected from composite oxides of lithium and a metal selected from cobalt, manganese, nickel, and a combination thereof. The oxide-based cathode active material may include, for example, a compound represented by one selected from the following formulae: $Li_aA_{1-b}B'_bD_2$ where $0.90 \leq a \leq 1$ and $0 \leq b \leq 0.5$; $Li_aE_{1-b}B'_bO_{2-c}D_c$ where $0.90 \leq a \leq 1$, $0 \leq b \leq 0.5$, and $0 \leq c \leq 0.05$; $LiE_{2-b}B'_bO_{4-c}D_c$ where $0 \leq b \leq 0.5$ and $0 \leq c \leq 0.05$; $Li_aNi_{1-b-c}Co_bB'_cD_\alpha$ where $0.90 \leq a \leq 1$, $0 \leq b \leq 0.5$, $0 \leq c \leq 0.05$, and $0 < \alpha \leq 2$; $Li_aNi_{1-b-c}Co_bB'_cO_{2-\alpha}F'_\alpha$ where $0.90 \leq a \leq 1$, $0 \leq b \leq 0.5$, $0 \leq c \leq 0.05$, and $0 < \alpha < 2$; $Li_aNi_{1-b-c}Co_bB'_cO_{2-\alpha}F'_\alpha$ where $0.90 \leq a \leq 1$, $0 \leq b \leq 0.5$, $0 \leq c \leq 0.05$, and $0 < \alpha < 2$; $Li_aNi_{1-b-c}Mn_bB'_cD_\alpha$ where $0.90 \leq a \leq 1$, $0 \leq b \leq 0.5$, $0 \leq c \leq 0.05$, and $0 < \alpha \leq 2$; $Li_aNi_{1-b-c}Mn_bB'_cO_{2-\alpha}F'_\alpha$ where $0.90 \leq a \leq 1$, $0 \leq b \leq 0.5$, $0 \leq c \leq 0.05$, and $0 < \alpha < 2$; $Li_aNi_{1-b-c}Mn_bB'_cO_{2-\alpha}F'_\alpha$ where $0.90 \leq a \leq 1$, $0 \leq b \leq 0.5$, $0 \leq c \leq 0.05$,

and $0 < \alpha < 2$; $Li_aNi_bE_cG_dO_2$ where $0.90 \leq a \leq 1$, $0 \leq b \leq 0.9$, $0 \leq c \leq 0.5$, and $0.001 \leq d \leq 0.1$; $Li_aNi_bCo_cMn_dG_eO_2$ where $0.90 \leq a \leq 1$, $0 \leq b \leq 0.9$, $0 \leq c \leq 0.5$, $0 \leq d \leq 0.5$, and $0.001 \leq e \leq 0.1$; $Li_aNiG_bO_2$ where $0.90 \leq a \leq 1$ and $0.001 \leq b \leq 0.1$; $Li_aCoG_bO_2$ where $0.90 \leq a \leq 1$ and $0.001 \leq b \leq 0.1$; $Li_aMnG_bO_2$ where $0.90 \leq a \leq 1$ and $0.001 \leq b \leq 0.1$; $Li_aMn_2G_bO_4$ where $0.90 \leq a \leq 1$ and $0.001 \leq b \leq 0.1$; $LiV_2O_5$; $LiI'O_2$; $LiNiVO_4$; $Li_{(3-f)}J_2(PO_4)_3$ where $0 \leq f \leq 2$; $Li_{(3-f)}Fe_2(PO_4)_3$ where $0 \leq f \leq 2$; and $LiFePO_4$.

In the formulae of the above-described compounds, A may be nickel (Ni), cobalt (Co), manganese (Mn), or a combination thereof, B' may be aluminum (Al), Ni, Co, Mn, chromium (Cr), iron (Fe), magnesium (Mg), strontium (Sr), vanadium (V), a rare earth element, or a combination thereof, D may be oxygen (O), fluorine (F), sulfur (S), phosphorus (P), or a combination thereof, E may be Co, Mn, or a combination thereof, F' may be F, S, P, or a combination thereof, G may be Al, Cr, Mn, Fe, Mg, lanthanum (La), cerium (Ce), Sr, V, or a combination thereof, Q may be titanium (Ti), molybdenum (Mo), Mn, or a combination thereof, I' may be Cr, V, Fe, scandium (Sc), yttrium (Y), or a combination thereof, and J may be V, Cr, Mn, Co, Ni, copper (Cu), or a combination thereof. Also, the above-mentioned compound having a coating layer on the surface may be used, or a mixture of the compound described above and another compound having a coating layer may be used. The coating layer on the surface of the above-described compound may include, for example, a coating element compound, such as an oxide of a coating element, a hydroxide of the coating element, an oxyhydroxide of the coating element, an oxycarbonate of the coating element, or a hydroxyl carbonate of the coating element. The compound constituting the coating layer may be amorphous and/or crystalline. The coating element included in the coating layer may be Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a mixture thereof. A coating layer formation method may be selected from methods that do not (or substantially do not) adversely affect physical properties of the cathode active material. The coating layer formation method may be, for example, spray coating, immersion, and/or the like. The coating layer formation methods will be apparent to one of ordinary skill in the art upon reviewing this disclosure, and thus, further detailed description thereof is not necessary here.

The oxide-based cathode active material may include, for example, a lithium transition metal oxide represented by one selected from Formulae 1 to 8:

Formula 1       $Li_aNi_xCo_yM_zO_{2-b}A_b$

wherein, in Formula 1,

$1.0 \leq a \leq 1.2$, $0 \leq b \leq 0.2$, $0.8 \leq x < 1$, $0 \leq y \leq 0.3$, $0 < z \leq 0.3$, and $x+y+z=1$,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof,

Formula 2       $LiNi_xCo_yMn_zO_2$

Formula 3       $LiNi_xCo_yAl_zO_2$

wherein, in Formulae 2 and 3, $0.8 \leq x \leq 0.95$, $0 \leq y \leq 0.2$, $0 < z \leq 0.2$, and $x+y+z=1$,

Formula 4       $LiNi_xCo_yMn_zAl_wO_2$

wherein, in Formula 4, $0.8 \leq x \leq 0.95$, $0 \leq y \leq 0.2$, $0 < z \leq 0.2$, $0 < w \leq 0.2$, and $x+y+z+w=1$,

Formula 5       $Li_aCo_xM_yO_{2-b}A_b$

wherein, in Formula 5,

$1.0 \leq a \leq 1.2$, $0 \leq b \leq 0.2$, $0.9 \leq x \leq 1$, $0 \leq y \leq 0.1$, and $x+y=1$,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof,

Formula 6       $Li_aNi_xMn_yM'_zO_{2-b}A_b$

wherein, in Formula 6,

$1.0 \leq a \leq 1.2$, $0 \leq b \leq 0.2$, $0 < x \leq 0.3$, $0.5 \leq y < 1$, $0 < z \leq 0.3$, and $x+y+z=1$,

M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and

A may be F, S, Cl, Br, or a combination thereof,

$$\text{Formula 7} \qquad Li_aM1_xM2_yPO_{4-b}X_b$$

wherein, in Formula 7, $0.90 \leq a \leq 1.1$, $0 \leq x \leq 0.9$, $0 \leq y \leq 0.5$, $0.9 < x+y < 1.1$, and $0 \leq b \leq 2$, and

M1 may be chromium (Cr), manganese (Mn), iron (Fe), cobalt (Co), nickel (Ni), copper (Cu), zirconium (Zr), or a combination thereof,

M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof,

$$\text{Formula 8} \qquad Li_aM3_zPO_4$$

wherein, in Formula 8, $0.90 \leq a \leq 1.1$ and $0.9 \leq z \leq 1.1$, and

M3 may be chromium (Cr), manganese (Mn), iron (Fe), cobalt (Co), nickel (Ni), copper (Cu), zirconium (Zr), or a combination thereof.

A coating layer may cover the oxide-based cathode active material. The coating layer may be any suitable coating layer used as a coating layer for a cathode active material of an all-solid secondary battery. The coating layer may be, for example, $Li_2O$-$ZrO_2$ (LZO) and/or the like.

The size of the oxide-based cathode active material (e.g., the size of particles of the oxide-based cathode active material) may be in a range of, for example, about 0.5 μm to about 30 μm, about 0.5 μm to about 20 μm, or about 1 μm to about 15 μm. The oxide-based cathode active material (e.g., the particles of the oxide-based cathode active material particles) may be, for example, single crystal particles and/or polycrystal particles.

For example, the cathode active material may be a composite cathode active material including: a core that absorbs and desorbs lithium; and a shell on the core.

For example, the composite cathode active material may include: a core that absorbs and desorbs lithium; and a shell provided along a surface of the shell, wherein the shell includes: at least one first metal oxide represented by Formula $M_aO_b$ (where $0 < a \leq 3$ and $0 < b < 4$, and if a is 1, 2, or 3, b is not an integer); and graphene, the first metal oxide may be provided in a matrix of the graphene, and M may be at least one metal selected from Groups 2 to 13, Group 15, and Group 16 of the Periodic Table of Elements. The core that absorbs and desorbs lithium may include, for example, the $Li_2S$-containing composite described above, and the $Li_2S$-containing composite may include, for example, a composite of $Li_2S$ and carbon, a composite of $Li_2S$, carbon, and a solid electrolyte, a composite of $Li_2S$ and a solid electrolyte, a composite of $Li_2S$, a lithium salt, and carbon, a composite of $Li_2S$ and a metal carbide, a composite of $Li_2S$, carbon, and a metal carbide, a composite of $Li_2S$ and a metal nitride, a composite of $Li_2S$, carbon, and a metal nitride, or a combination thereof. The core that absorbs and desorbs lithium may include, for example, a lithium transition metal oxide represented by one selected from Formulae 1 to 8. The core that absorbs and desorbs lithium may include, for example, a lithium transition metal oxide having a Ni content of 80 mol% or more. For example, the shell including the first metal oxide and graphene may be on the core that absorbs and desorbs lithium. Existing graphene is difficult to coat uniformly on a core due to agglomeration. In one or more embodiments, the composite cathode active material may use a composite including a plurality of first metal oxides in the graphene matrix, and thus, the agglomeration of graphene may be prevented or reduced and a uniform (e.g., substantially uniform) shell may be on the core. Thus, contact (e.g., physical contact) between the core and an electrolyte may be effectively prevented or reduced, and thus, side reactions due to the contact between the core and an electrolyte may be prevented or reduced. The shell including graphene may be flexible, thereby easily accommodating a change in the volume of the composite cathode active material during charging and discharging, and thus, the occurrence of cracks inside the composite cathode active material may be suppressed or reduced. Graphene has high electronic conductivity, and thus, the interfacial resistance between the composite cathode active material and an electrolyte may be reduced. Therefore, despite the introduction of the shell including graphene, the internal resistance of a lithium battery may be maintained or reduced. In some embodiments, the first metal oxide has withstand voltage, and thus may prevent or reduce deterioration of the $Li_2S$-containing composite or the lithium transition metal oxide included in the core during charging and discharging at a high voltage. As a result, the cycle characteristics and high-temperature stability of a lithium battery including the composite cathode active material may be improved. The shell may include, for example, one type (or kind) of first metal oxide or two or more types (or kinds) of different first metal oxides. A metal included in the first metal oxide may be, for example, at least one selected from Al, Nb, Mg, Sc, Ti, Zr, V, W, Mn, Fe, Co, Pd, Cu, Ag, Zn, Sb, and Se. The first metal oxide may be, for example, at least one selected from $Al_2O_z$ where $0<z<3$, $NbO_x$ where $0<x<2.5$, $MgO_x$ where $0<x<1$, $Sc_2O_z$ where $0<z<3$, $TiO_y$ where $0<y<2$, $ZrO_y$ where $0<y<2$, $V_2O_z$ where $0<z<3$, $WO_y$ where $0<y<2$, $MnO_y$ where $0<y<2$, $Fe_2O_z$ where $0<z<3$, $Co_3O_w$ where $0<w<4$, $PdO_x$ where $0<x<1$, $CuO_x$ where $0<x<1$, $AgO_x$ where $0<x<1$, $ZnO_x$ where $0<x<1$, $Sb_2O_z$ where $0<z<3$, and $SeO_y$ where $0<y<2$. By providing such a first metal oxide in the graphene matrix, the uniformity of the shell on the core may be improved, and the withstand voltage of the composite cathode active material may be further improved. For example, the shell may include $Al_2O_x$ where $0<x<3$ as the first metal oxide. The shell may further include one or more second metal oxides represented by $M_aO_c$ wherein $0<a\leq3$ and $0<c\leq4$, and if a is 1, 2, or 3, c is an integer. M may be at least one metal selected from Groups 2 to 13, Group 15, and Group 16 of the Periodic Table of Elements. For example, the second metal oxide may include the same metal as the first metal oxide, and a ratio (c/a) of c to a in the second metal oxide may has a greater value than a ratio (b/a) of b to a in the first metal oxide. For example, $c/a > b/a$ may be satisfied. The second metal oxide may be, for example, selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $CO_3O_4$, PdO, CuO, AgO, ZnO, $Sb_2O_3$, and $SeO_2$. The first metal oxide may be a reduction product of the second metal oxide. The first metal oxide may be obtained by reducing part or all of the second metal oxide. Thus, the first metal oxide has a lower oxygen content and a lower metal oxidation number than the second metal oxide. For example, the shell may include $Al_2O_x$ where $0<x<3$ as the first metal oxide and $Al_2O_3$ as the second metal oxide. The thickness of the shell may be in a range of, for example, about 1 nm to about 5 $\mu$m, about 1 nm to about 1 $\mu$m, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. If the thickness of the shell is within the above ranges, an increase in the internal resistance of a lithium battery including the composite cathode active material may be suppressed or reduced. At least one selected from the first metal oxide and the second metal oxide included in the composite may have an average particle diameter of about 1 nm to about 1 $\mu$m, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. If the first metal oxide and/or the second metal oxide has a particle diameter within this nanometer range, the first metal oxide and/or the second metal oxide may be more uniformly distributed in the graphene matrix of the composite. Therefore, such a composite may be uniformly (e.g., substantially uniformly) coated on the core without (e.g., substantially without) agglomeration to form a shell. In other embodiments, if the first metal oxide and/or the second metal oxide has (or have) a particle diameter within the above ranges, the first metal oxide and/or the second metal oxide may be more uniformly on the core. Therefore, due to the uniform (e.g., substantially uniform) distribution of the first metal oxide and/or the second metal oxide on the core, withstand voltage characteristics may be more effectively exhibited. The average particle diameters of the first metal oxide and the second metal oxide may be measured by using, for example, a measurement apparatus using a laser diffraction method and/or a dynamic light scattering method. In other embodiments, the particle diameters of the first metal oxide and the second metal oxide may be measured by a scanning electron microscope and/or a transmission electron microscope.

The cathode active material may have a particle shape, such as a true spherical shape, an elliptical shape, and/or a spherical shape. The particle diameter of the cathode active material is not limited, and may be within any range suitable for a cathode active material of an all-solid secondary battery in the art. The amount of the cathode active material in the cathode 10 is not limited, and may be within any range suitable for a cathode layer of an all-solid secondary battery in the art. The amount of the cathode active material included in the cathode active material layer 12 may be in a range of, for example, about 30 wt% to about 99 wt%, about 30 wt% to about 90 wt%, about 30 wt% to about 80 wt%, about 30 wt% to about 70 wt%, or about 30 wt% to about 50 wt%, with respect to a total weight of the cathode active material layer 12.

**Cathode: conductive material**

The cathode active material layer 12 may further include a conductive material (e.g., an electrically conductive material). The conductive material may be, for example, a carbon-based conductive material, a metal-based conductive material, or a combination thereof. The carbon-based conductive material may be, for example, graphite, carbon black, acetylene black, Ketjen black, carbon fiber, or a combination thereof. However, the present disclosure is not limited thereto and any suitable material that may be used as a carbon-based conductive material in the art may be used. The metal-based conductive material may be metal powder, a metal fiber, or a combination thereof, but the present disclosure is not limited thereto and any suitable metal-based conductive material used in the art may be used. The amount of the conductive material included in the cathode active material layer 12 may be in a range of, for example, about 1 wt% to about 30 wt%, about 1 wt% to about 20 wt%, or about 1 wt% to about 10 wt%, with respect to the total weight of the cathode active material layer 12.

**Cathode: binder**

The cathode active material layer 12 may further include a binder. The binder may be, for example, styrene butadiene rubber (SBR), polytetrafluoroethylene, polyvinylidene fluoride, and/or polyethylene. However, the present disclosure is not limited thereto and any suitable binder used in the art may be used. The amount of the binder included in the cathode active material layer 12 may be in a range of, for example, about 1 wt% to about 10 wt% with respect to the total weight of the cathode active material layer 12. In some embodiments, the binder may be omitted.

**Cathode: other additives**

The cathode active material layer 12 may further include, for example, additives such as a filler, a coating agent, a dispersant, an ion-conductive adjuvant, and/or the like, in addition to the cathode active material, the solid electrolyte, the binder, and the conductive material as described above.

As the filler, the coating agent, the dispersant, the ion-conductive adjuvant, and/or the like that may be included in the cathode active material layer 12, any suitable materials generally used in electrodes of all-solid secondary batteries may be used.

**Cathode: cathode current collector**

The cathode current collector 11 may be made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or any alloy thereof in the form of a plate, foil, and/or the like. The cathode current collector 11 may be omitted. The thickness of the cathode current collector 11 may be in a range of, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The cathode current collector 11 may include, for example, a base film and a metal layer on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator (e.g., an electrical insulator). The base film softens and/or liquefies if a short circuit occurs, by including an insulating thermoplastic polymer (e.g., an electrically insulating thermoplastic polymer), and thus a rapid increase in current may be suppressed or reduced by blocking or decreasing battery operation. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), and/or an alloy thereof. The metal layer may act as an electrochemical fuse and break if an overcurrent occurs to perform a short-circuit prevention or reduction function. The limit current and the maximum current may be adjusted by adjusting the thickness of the metal layer. The metal layer may be plated and/or deposited on the base film. If the thickness of the metal layer is reduced, the limit current and/or the maximum current of the cathode current collector 11 may be reduced, and thus, the stability of the lithium battery in the event of short circuit may be enhanced. A lead tab may be added on the metal layer for connection to the outside. The lead tab may be welded to the metal layer or a metal layer/base film stack by ultrasonic welding, laser welding, spot welding, and/or the like. The metal layer may be electrically connected to the lead tab while the base film and/or the metal layer is melted during welding. To make welding between the metal layer and the lead tab more rigid, a metal chip may be added between the metal layer and the lead tab. The metal chip may be foil of the same material as a metal of the metal layer. The metal chip may be, for example, metal foil and/or metal mesh. The metal chip may be, for example, aluminum foil, copper foil, and/or SUS foil. The lead tab may be welded to a metal chip/metal layer stack or a metal chip/metal layer/base film stack by welding to the lead tab after the metal chip is on the metal layer. The metal layer or the metal layer/metal chip stack may be electrically connected to the lead tab while the base film, the metal layer, and/or the metal chip are melted during welding. A metal chip and/or a lead tab may be added on a portion of the metal layer. The base film may have a thickness of, for example, about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If the thickness of the base film is within the above ranges, the weight of an electrode assembly may be more effectively reduced. The base film may have a melting point of, for example, about 100 °C to about 300 °C, about 100 °C to about 250 °C, or about 100 °C to about 200 °C. If the melting point of the base film is within the above ranges, the base film may be melted and easily coupled to the lead tab in the lead tab welding process. Surface treatment such as corona treatment may be performed on the base film to improve the adhesion between the base film and the metal layer. The metal layer may have a thickness of, for example, about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If the thickness of the metal layer is within the above ranges, the stability of an electrode assembly may be secured while maintaining conductivity (e.g., electrical conductivity). The metal chip may have a thickness of, for example, about 2 $\mu$m to about 10 $\mu$m, about 2 $\mu$m to about 7 $\mu$m, or about 4 $\mu$m to about 6 $\mu$m. If the thickness of the metal chip is within the above ranges, connection between the metal layer and the lead tab may be further facilitated. If the cathode current collector 11 has this structure, the weight of the cathode may be reduced, resulting in improved energy density of the cathode and the lithium battery.

**Cathode: inactive member**

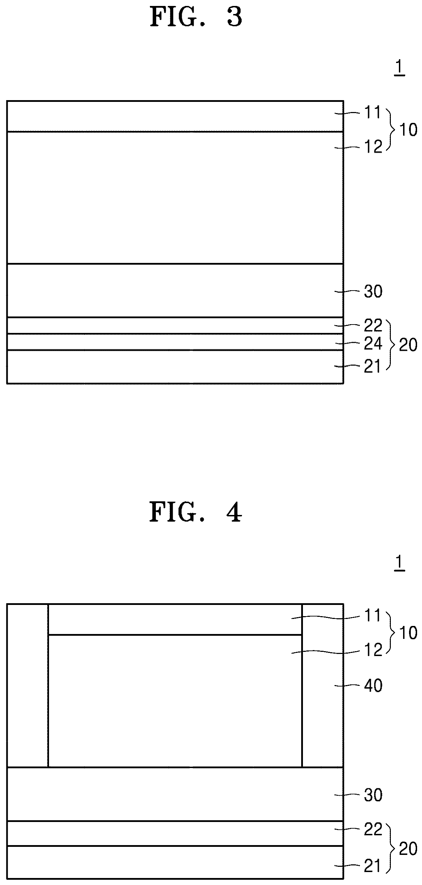

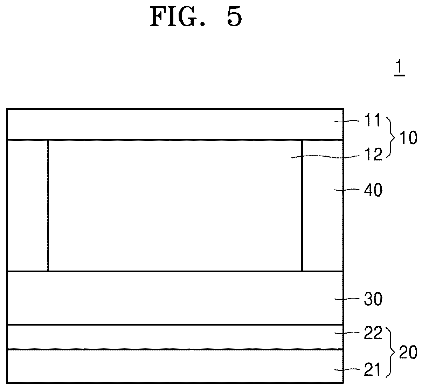

Referring to FIGS. 4-5, the cathode 10 includes: the cathode current collector 11; and the cathode active material layer 12 on one surface of the cathode current collector 11. An inactive member 40 may be on a side surface of the cathode 10. Referring to FIG. 4, the inactive member 40 may be on side surfaces of the cathode active material layer 12 and the cathode current collector 11. Referring to FIG. 5, the inactive member 40 may be on a side surface of the cathode active material layer 12 and between the solid electrolyte layer 30 and the cathode current collector 11 facing the solid electrolyte layer 30. The inactive member 40 may not be on a side surface of the cathode current collector 11.

Due to the presence of the inactive member 40, the occurrence of cracks in the solid electrolyte layer 30 may be prevented or reduced during manufacturing and/or charging and discharging of the all-solid secondary battery 1, resulting in improved cycle characteristics of the all-solid secondary battery 1. In the all-solid secondary battery 1 not including the inactive member 40, uneven pressure is applied to the solid electrolyte layer 30 in contact (e.g., physical contact) with the cathode 10 during manufacturing and/or charging and discharging of the all-solid secondary battery 1, and thus, cracks occur in the solid electrolyte layer 30 and lithium metal grows through the cracks (e.g., lithium metal dendrites may grow through the cracks), thereby resulting in an increased possibility of a short circuit.

In the all-solid secondary battery 1, the thickness of the inactive member 40 may be greater than or equal to the thickness of the cathode active material layer 12. In other embodiments, in the all-solid secondary battery 1, the thickness of the inactive member 40 may be substantially the same as the thickness of the cathode 10. Thus, uniform (e.g., substantially uniform) pressure is applied between the cathode 10 and the solid electrolyte layer 30, and the cathode 10 and the solid electrolyte layer 30 are in sufficiently close contact (e.g., physical contact) with each other, and thus, the interfacial resistance between the cathode 10 and the solid electrolyte layer 30 may be reduced. In some embodiments, the solid electrolyte layer 30 may be sufficiently sintered during manufacturing of the all-solid secondary battery 1 by pressing, and thus, the internal resistance of the solid electrolyte layer 30 and the all-solid secondary battery 1 including the same may be reduced.

The inactive member 40 may contact (e.g., physically contact) the solid electrolyte layer 30 while surrounding a side surface of the cathode 10. Thus, cracks in the solid electrolyte layer 30, caused by a pressure difference during a pressing process in the solid electrolyte layer 30 that is not in contact (e.g., physical contact) with the cathode 20, may be effectively suppressed or reduced. The inactive member 40 surrounds a side surface of the cathode 10 and is separated from the anode 20, for example, a first anode active material layer 22. The inactive member 40 surrounds a side surface of the cathode 10 and contacts (e.g., physically contacts) the solid electrolyte layer 30, and is separated from the anode 20. Thus, the possibility of a short circuit occurring due to physical contact between the cathode 10 and the first anode active material layer 22, overcharging of lithium, and/or the like may be suppressed or reduced. For example, the inactive member 40 may be on a side surface of the cathode active material layer 12 and at the same time (or concurrently), may be on a side surface of the cathode current collector 11, and thus, the possibility of a short circuit occurring due to contact (e.g., physical contact) between the cathode current collector 11 and the anode 20 may be more effectively suppressed or reduced.

Referring to FIGS. 4-5, the inactive member 40 extends from a side surface of the cathode 10 to an end portion of the solid electrolyte layer 30. Due to the configuration of having the inactive member 40 extend to the end portion of the solid electrolyte layer 30, the occurrence of cracks in the end portion of the solid electrolyte layer 30 may be suppressed or reduced. The end portion of the solid electrolyte layer 30 may be the outermost portion in contact (e.g., physical contact) with a side surface of the solid electrolyte layer 30. The inactive member 40 may extend to the outermost portion in contact (e.g., physical contact) with the side surface of the solid electrolyte layer 30. The inactive member 40 may be separated (e.g., physically separated) from the anode 20, for example, physically separated from the first anode active material layer 22. The inactive member 40 may extend to the end portion of the solid electrolyte layer 30, but may not contact the anode 20. For example, the inactive member 40 may fill a space extending from a side surface of the cathode 10 to the end portion of the solid electrolyte layer 30.

Referring to FIGS. 4-5, the width of the inactive member 40 extending from a side surface of the cathode 10 to the end portion of the solid electrolyte layer 30 may be in a range of, for example, about 1% to about 30%, about 1% to about 25%, about 1% to about 20%, about 1% to about 15%, about 1% to about 10%, or about 1% to about 5% of the width between a side surface of the cathode 10 and anode side surface facing the side surface. If the width of the inactive member 40 is too large, the energy density of the all-solid secondary battery 1 may be reduced. If the width of the inactive member 40 is too small, the effect of providing the inactive member 40 may be insignificant or insufficient.

The area of the cathode 10 may be smaller than the area of the solid electrolyte layer 30 in contact (e.g., physical contact) with the cathode 10. The inactive member 40 may surround a side surface of the cathode 10, to compensate for the difference in area between the cathode 10 and the solid electrolyte layer 30. The area of the inactive member 40 compensates for the difference between the area of the cathode 10 and the area of the solid electrolyte layer 30, and thus, the occurrence of cracks in the solid electrolyte layer 30 due to a pressure difference during a pressing process may be effectively suppressed or reduced. For example, a sum of the area of the cathode 10 and the area of the inactive member 40 may be equal to the area of the solid electrolyte layer 30.

The area of the cathode 10 may be, for example, less than 100%, 99% or less, 98% or less, 97% or less, 96% or less, or 95% or less of the area of the solid electrolyte layer 30. The area of the cathode 10 may be in a range of, for example, greater than or equal to 50% and less than about 100%, about 50% to about 99%, about 55% to about 98%, about 60% to about 97%, about 70% to about 96%, about 80% to about 95%, or about 85% to about 95% of the area of the solid electrolyte layer 30.

If the area of the cathode 10 is equal to or greater than the area of the solid electrolyte layer 30, the possibility of a short circuit occurring due to physical contact between the cathode 10 and the first anode active material layer 22, overcharging of lithium, and/or the like may increase. For example, the area of the cathode 10 may be equal to the area of the cathode active material layer 12. For example, the area of the cathode 10 may be equal to the area of the cathode current collector 11.

The area of the inactive member 40 may be, for example, 50% or less, 40% or less, 30% or less, 20% or less, or 10% or less of the area of the cathode 10. The area of the inactive member 40 may be in a range of, for example, about 1% to about 50%, about 5% to about 40%, about 5% to about 30%, about 5% to about 20%, or about 5% to about 15% of the area of the cathode 10.

The area of the cathode 10 may be smaller than the area of an anode current collector 21. The area of the cathode 10 may be, for example, less than 100%, 99% or less, 98% or less, 97% or less, 96% or less, or 95% or less of the area of the anode current collector 21. The area of the cathode 10 may be in a range of, for example, greater than or equal to about 50% and less than about 100%, about 50% to about 99%, about 55% to about 98%, about 60% to about 97%, about 70% to about 96%, about 80% to about 95%, or about 85% to about 95% of the area of the anode current collector 21. The area of the anode current collector 21 may be equal to, for example, the area of the anode 20. The area of the anode current collector 21 may be equal to, for example, the area of the first anode active material layer 22.

In the present disclosure, the disclosure of the "same" area, length, width, thickness and/or shape is intended to exclude cases of having different area, length, width, thickness and/or shape and include all the cases of having "substantially the same" area, length, width, thickness and/or shape. The "same" area, length, width and/or thickness means that the unintentional difference in area, length, width, and/or thickness between objects to be compared is in a range of, for example, less than 3%, less than 2%, less than 1%, less than 0.5%, or less than 0.1%.

For example, the thickness of the inactive member 40 may be greater than the thickness of the first anode active material layer 22. The thickness of the first anode active material layer 22 may be, for example, 50% or less, 40% or less, 30% or less, 20% or less, or 10% or less of the thickness of the inactive member 40. The thickness of the first anode active material layer 22 may be in a range of, for example, about 1% to about 50%, about 1% to about 40%, about 1% to about 30%, about 1% to about 20%, or about 1% to about 10% of the thickness of the inactive member 40.

The inactive member 40 may be a gasket. By using a gasket as the inactive member 40, the occurrence of cracks in the solid electrolyte layer 30 due to a pressure difference during a pressing process may be effectively suppressed or reduced.

The inactive member 40 may have, for example, a single-layered structure. In other embodiments, the inactive member 40 may have a multi-layered structure. In the inactive member 40 having a multi-layered structure, respective layers may have different compositions. The inactive member having a multi-layered structure may have, for example, a two-layered structure, a three-layered structure, a four-layered structure, or a five-layered structure. The inactive member 40 having a multi-layered structure may include, for example, at least one adhesive layer and at least one support layer. For example, the adhesive layer may effectively prevent or reduce separation between the cathode 10 and the solid electrolyte layer 30, and/or the like caused by a change in the volume of the cathode 10 occurring during charging and discharging processes of the all-solid secondary battery 10, and provide the adhesion between the support layer and other layers, thereby improving the film strength of the inactive member 40. The support layer may provide support strength to the inactive member 40, prevent or reduce application of uneven pressure to the solid electrolyte layer 30 during a pressing process and/or charging and discharging processes, and prevent or reduce deformation of the all-solid secondary battery 1.

The inactive member 40 may be, for example, a flame-retardant inactive member. Due to flame retardancy provided by the flame-retardant inactive member, the possibility of thermal runaway and ignition of the all-solid secondary battery 1 may be prevented or reduced. As a result, the safety of the all-solid secondary battery 1 may be further improved. The flame-retardant inactive member may prevent or reduce the deterioration of the all-solid secondary battery 1 by absorbing residual moisture in the all-solid secondary battery 1, thereby resulting in improved lifespan characteristics of the all-solid secondary battery 1.

The flame-retardant inactive member may include, for example, a matrix and a filler. The matrix may include, for example, a substrate and a reinforcing material. The matrix may include, for example, a fibrous substrate and a fibrous reinforcing material. The matrix may have elasticity by including the substrate. Thus, the matrix may effectively accommodate volume changes during charging and discharging of the all-solid secondary battery 1 and may be provided in various suitable positions. The substrate included in the matrix may include, for example, a first fibrous material. By including the first fibrous material, the substrate may effectively accommodate a change in the volume of the cathode 10 occurring during charging and discharging processes of the all-solid secondary battery 1, and deformation in the inactive member 40 due to a change in the volume of the cathode 10 may be effectively suppressed or reduced. The first fibrous material may be, for example, a material having an aspect ratio of 5 or more, 20 or more, or 50 or more. The first fibrous material may be, for example, a material having an aspect ratio of about 5 to about 1,000, about 20 to about 1,000, or about 50 to about 1,000. The first fibrous material may be, for example, an insulating material (e.g., an electrically insulating material). If the first fibrous material is an insulating material, a short circuit between the cathode 10 and the anode 20 caused by lithium dendrites and/or the like that occur during charging and discharging processes of the all-solid secondary battery 1 may be effectively prevented or reduced. The first fibrous material may include, for example, at least one selected from pulp fibers, insulating polymer fibers, and ion-conducting polymer fibers. The matrix may have improved strength by including the reinforcing material. Thus, the matrix may prevent or reduce excessive volume changes during charging and discharging of the all-solid secondary battery 1 and prevent or reduce deformation of the all-solid secondary battery 1. The reinforcing material included in the matrix may include, for example, a second fibrous material. By including the second fibrous material in the reinforcing material, the strength of the matrix may be more uniformly increased. The second fibrous material may be, for example, a material having an aspect ratio of 3 or more, 5 or more, or 10 or more. The first fibrous material may be, for example, a material having an aspect ratio of about 3 to about 100, about 5 to about 100, or about 10 to about 100. The second fibrous material may be, for example, a flame-retardant material. If the second fibrous material is a flame-retardant material, ignition due to thermal runaway that occurs during charging and discharging processes of the second battery 1 or occurs due to external shock may be effectively suppressed or reduced. The second fibrous material may be, for example, glass fiber, metal oxide fiber, ceramic fiber, and/or the like.

The flame-retardant inactive member may include a filler, in addition to the matrix. The filler may be provided inside the matrix, on a surface of the matrix, or both the inside and on the surface thereof. The filler may be, for example, an inorganic material. The filler included in the flame-retardant inactive member may be, for example, a moisture getter. The filler may absorb moisture at a temperature of, for example, less than 100 °C, thereby removing moisture remaining in the all-solid secondary battery 1, and thus, the deterioration of the all-solid secondary battery 1 may be prevented or reduced. In other embodiments, if the temperature of the all-solid secondary battery 1 is raised to 150 °C or higher due to thermal runaway that occurs during charging and discharging processes of the all-solid secondary battery 1 or occurs due to external shock, the filler releases the absorbed moisture, and thus, ignition of the all-solid secondary battery 1 may be effectively suppressed or reduced. The filler may be, for example, a flame retardant. For example, the filler may be a metal hydroxide having hygroscopic properties. Examples of the metal hydroxide included in the filler may include $Mg(OH)_2$, $Fe(OH)_3$, $Sb(OH)_3$, $Sn(OH)_4$, $Tl(OH)_3$, $Zr(OH)_4$, $Al(OH)$, or a combination thereof. The amount of the filler included in the flame-retardant inactive member may be in a range of, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, with respect to 100 parts by weight of the flame-retardant inactive member 40.

The flame-retardant inactive member may further include, for example, a binder. The binder may include, for example, a curable polymer and/or a non-curable polymer. The curable polymer may be a polymer that gets cured by heat and/or pressure. For example, the curable polymer may be solid at room temperature. Examples of the flame-retardant inactive member 40 may include a heat-press curable film and/or a cured product thereof. The heat-press curable film may be, for example, TSA-66 manufactured by Toray.

The flame-retardant inactive member 40 may further include other materials, in addition to the above-described substrate, reinforcing material, filler, and binder. For example, the flame-retardant inactive member may further include at least one selected from paper, an insulating polymer, an ion conductive polymer, an insulating inorganic material, an oxide-based solid electrolyte, and a sulfide-based solid electrolyte. The insulating polymer may be, for example, an olefin-based polymer such as polypropylene (PP) and/or polyethylene (PE).

The density of the substrate and/or reinforcing material included in the flame-retardant inactive member may be in a range of, for example, about 10% to about 300%, about 10% to about 150%, about 10% to about 140%, about 10% to about 130%, or about 10% to about 120% of the density of the cathode active material included in the cathode active material layer 12.

The inactive member 40 may be a member that does not include an electrochemically active material, for example, an electrode active material. The electrode active material may be a material capable of absorbing/desorbing lithium. The inactive member 40 may be a member formed of any suitable material used in the art that is not an electrode active material.

**Anode**

**Anode: anode active material**

Referring to FIGS. 1-5, the anode 20 includes the anode current collector 21 and the first anode active material layer 22 on a surface of the anode current collector 21.

The first negative electrode active material layer 22 may be, for example, a metal layer, and the metal layer may include lithium and/or a lithium alloy.

In other embodiments, the first anode active material layer 22 may include, for example, an anode active material and a binder.

The anode active material included in the first anode active material layer 22 may be, for example, an anode material capable of forming an alloy or compound with lithium.

The anode active material included in the first anode active material layer 22 may have, for example, a particle form. The average particle diameter of the anode active material in particle form may be, for example, 4 $\mu$m or less, 3 $\mu$m or less, 2 $\mu$m or less, 1 $\mu$m or less, 500 nm or less, 300 nm or less, or 100 nm or less. The average particle diameter of the anode active material in particle form may be in a range of, for example, about 10 nm to about 4 $\mu$m, about 10 nm to about 3 $\mu$m, about 10 nm to about 2 $\mu$m, about 10 nm to about 1 $\mu$m, about 10 nm to about 500 nm, about 10 nm to about 300 nm, or about 10 nm to about 100 nm. If the average particle diameter of the anode active material is within the above ranges, reversible absorption and/or desorption of lithium during charging and discharging may be further facilitated. The average particle diameter of the anode active material may be, for example, a median diameter (D50) measured by using a laser particle size distribution analyzer.

The anode active material included in the first anode active material layer 22 may include, for example, at least one selected from a carbon-based anode active material and a metal and/or metalloid anode active material. The carbon-based anode active material may include, for example, amorphous carbon, crystalline carbon, porous carbon, or a combination thereof.

The carbon-based anode active material may be, for example, amorphous carbon. The amorphous carbon may be, for example, carbon black (CB), acetylene black (AB), furnace black (FB), Ketjen black (KB), and/or graphene. However, the present disclosure is not limited thereto and any suitable carbon that is classified as amorphous carbon in the art may be used. Amorphous carbon is carbon that does not have crystallinity or has very low crystallinity and is distinguished from crystalline carbon and graphitic carbon.

The carbon-based anode active material may be, for example, porous carbon. The pore volume of the porous carbon may be in a range of, for example, about 0.1 cc/g to about 10.0 cc/g, about 0.5 cc/g to about 5 cc/g, or about 0.1 cc/g to about 1 cc/g. The average pore diameter of the porous carbon may be in a range of, for example, about 1 nm to about 50 nm, about 1 nm to about 30 nm, or about 1 nm to about 10 nm. The BET specific surface area of the porous carbon may be in a range of, for example, about 100 $m^2$/g to about 3,000 $m^2$/g.

The metal and/or metalloid anode active material may include at least one selected from gold (Au), platinum (Pt), palladium (Pd), silicon (Si), silver (Ag), aluminum (Al), bismuth (Bi), tin (Sn), and zinc (Zn). However, the present disclosure is not limited thereto and any suitable metal anode active material and/or metalloid anode active material that forms an alloy and/or compound with lithium used in the art may be used. For example, nickel (Ni) does not form an alloy with lithium, and thus is not a metal anode active material.

The first anode active material layer 22 may include one of these anode active materials, or a mixture of a plurality of different anode active materials. For example, the first anode active material layer 22 may include amorphous carbon alone, or may include at least one selected from gold (Au), platinum (Pt), palladium (Pd), silicon (Si), silver (Ag), aluminum (Al), bismuth (Bi), tin (Sn), and zinc (Zn). In other embodiments, the first anode active material layer 22 may include a mixture of amorphous carbon and at least one selected from gold (Au), platinum (Pt), palladium (Pd), silicon (Si), silver (Ag), aluminum (Al), bismuth (Bi), tin (Sn), and zinc (Zn). A mixing ratio of the mixture of amorphous carbon and gold and/or the like may be in a range of, for example, about 99:1 to about 1:99, about 10:1 to about 1:2, about 5:1 to about 1:1, or about 4:1 to about 2:1. However, the present disclosure is not limited thereto and the mixing ratio is selected depending on the desired or required characteristics of the all-solid secondary battery 1. If the anode active material has this composition, the cycle characteristics of the all-solid secondary battery 1 may be further improved.

The anode active material included in the first anode active material layer 22 may include, for example, a mixture of primary particles including or consisting of amorphous carbon and secondary particles including or consisting of a metal and/or a metalloid. The metal and/or the metalloid may include, for example, gold (Au), platinum (Pt), palladium (Pd), silicon (Si), silver (Ag), aluminum (Al), bismuth (Bi), tin (Sn), and/or zinc (Zn). In other embodiments, the metalloid may be a semiconductor. The amount of the secondary particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to a total weight of the mixture. If the amount of the secondary particles is within the above ranges, for example, the cycle characteristics of the all-solid secondary battery 1 may be further improved.

In other embodiments, the first anode active material layer 22 may include a composite anode active material. The composite anode active material may include, for example, a carbon-based support and a metal-based anode active material supported on the carbon-based support. If the composite anode active material has such a structure, localization of the metal-based anode active material in the first anode active material layer may be prevented or reduced and uniform (e.g., substantially uniform) distribution thereof may be obtained. As a result, the cycle characteristics of the all-solid secondary battery 1 including the first anode active material layer 22 may be further improved.

The metal-based anode active material supported on the carbon-based support may include, for example, a metal, a metal oxide, a composite of a metal and a metal oxide, or a combination thereof. Non-limiting examples of the metal may include gold (Au), platinum (Pt), palladium (Pd), silicon (Si), silver (Ag), aluminum (Al), bismuth (Bi), tin (Sn), tellurium (Te), and zinc (Zn). Non-limiting examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, $Au_xO_y$ where $0<x\leq2$ and $0<y\leq3$, $Pt_xO_y$ where $0<x\leq1$ and $0<y\leq2$, $Pd_xO_y$ where $0<x\leq1$ and $0<y\leq1$, $Si_xO_y$ where $0<x\leq1$ and $0<y\leq2$, $Ag_xO_y$ where $0<x\leq2$ and $0<y\leq1$, $Al_xO_y$ where $0<x\leq2$ and $0<y\leq3$, $Bi_xO_y$ where $0<x\leq2$ and $0<y\leq3$, $Sn_xO_y$ where $0<x\leq1$ and $0<y\leq2$, $Te_xO_y$ where $0<x\leq1$ and $0<y\leq3$, $Zn_xO_y$ where $0<x\leq1$ and $0<y\leq1$, or a combination thereof. The composite of a metal and a metal oxide may include, for example, a composite of Au and $Au_xO_y$ where $0<x\leq2$ and $0<y\leq3$, a composite of Pt and $Pt_xO_y$ where $0<x\leq1$ and $0<y\leq2$, a composite of Pd and $Pd_xO_y$ where $0<x\leq1$ and $0<y\leq1$, a composite of Si and $Si_xO_y$ where $0<x\leq1$ and $0<y\leq2$, a composite of Ag and $Ag_xO_y$ where $O<x\leq2$ and $O<y\leq1$, a composite of Al and $Al_xO_y$ where $0<x\leq2$ and $0<y\leq3$, a composite of Bi and $Bi_xO_y$ where $0<x\leq2$ and $0<y\leq3$, a composite of Sn and $Sn_xO_y$ where $0<x\leq1$ and $0<y\leq2$, a composite of Te and $Te_xO_y$ where $0<x\leq1$ and $0<y\leq3$, a composite of Zn and $Zn_xO_y$ where $0<x\leq1$ and $0<y\leq1$, or a combination thereof.

The carbon-based support may be, for example, amorphous carbon. The amorphous carbon may be, for example, carbon black (CB), acetylene black (AB), furnace black (FB), Ketjen black (KB), graphene, activated carbon, carbon nanofibers (CNFs), and/or carbon nanotubes (CNTs). However, the present disclosure is not limited thereto and any suitable carbon that is classified as amorphous carbon in the art may be used. Amorphous carbon is carbon that does not have crystallinity or has very low crystallinity and is distinguished from crystalline carbon and graphitic carbon. The carbon-based material, e.g., carbonaceous material, may be, for example, a carbon-based anode active material.

The composite anode active material may have, for example, a particle form. The particle diameter of the composite anode active material in particle form may be in a range of, for example, about 10 nm to about 4 $\mu$m, about 10 nm to about 1 $\mu$m, about 10 nm to about 500 nm, about 10 nm to about 200 nm, or about 10 nm to about 100 nm. If the particle diameter of the composite anode active material is within the above ranges, reversible absorption and/or desorption of lithium during charging and discharging may be further facilitated. The metal-based anode active material supported on the support may have, for example, a particle form. The particle diameter of the metal-based anode active material may be in a range of, for example, about 1 nm to about 200 nm, about 1 nm to about 150 nm, about 5 nm to about 100 nm, or about 10 nm to about 50 nm. The carbon-based support may have, for example, a particle form. The particle diameter of the particle form of the carbon-based support may be in a range of, for example, about 10 nm to about 2 $\mu$m, about 10 nm to about 1 $\mu$m, about 10 nm to about 500 nm, about 10 nm to about 200 nm, or about 10 nm to about 100 nm. If the particle diameter of the particle form of the carbon-based support is within the above ranges, the carbon-based support may be more uniformly provided in the first anode active material layer. The carbon-based support may be, for example, nanoparticles having a particle diameter of 500 nm or less. The particle diameter of the composite anode active material, the particle diameter of the metal-based anode active material, and the particle diameter of the carbon-based support may be, for example, average particle diameters. The average particle diameter may be, for example, a median diameter (D50) measured by using a laser particle size distribution analyzer. In other embodiments, the average particle diameter may be, for example, determined automatically by using software from an electron microscope image, and/or may be determined manually by manual means.

### Anode: binder

The binder included in the first anode active material layer 22 may be, for example, styrene-butadiene rubber (SBR), polytetrafluoroethylene, polyvinylidene fluoride, polyethylene, a vinylidene fluoride/hexafluoropropylene copolymer, polyacrylonitrile, and/or polymethyl methacrylate. However, the present disclosure is not limited thereto and any suitable binder used in the art may be used. The binder may include a binder alone (e.g., may include one sole binder) or may include a plurality of different binders.

By including the binder in the first anode active material layer 22, the first anode active material layer 22 is stabilized on the anode current collector 21. In other embodiments, the occurrence of cracks in the first anode active material layer 22 may be suppressed or reduced despite a change in the volume and/or relative position of the first anode active material layer 22 during charging and discharging processes. For example, if the first anode active material layer 22 does not include a binder, the first anode active material layer 22 may be easily separated from the anode current collector 21. Due to separation of the first anode active material layer 22 from the anode current collector 21, an exposed portion of the anode current collector 21 may contact (e.g., physically contact) the solid electrolyte layer 30, and a possibility of the occurrence of a short circuit may then increase. The first anode active material layer 22 may be prepared by, for example, applying a slurry, in which materials constituting the first anode active material layer 22 are dispersed, onto the anode current collector 21 and drying the slurry. By including the binder in the first anode active material layer 22, the anode active material may be stably dispersed in the slurry. For example, if the slurry is applied onto the anode current collector 21 by screen printing, it may be possible to suppress or reduce clogging of a screen (for example, clogging by aggregates of the anode active material).

**Anode: other additives**

The first anode active material layer 22 may further include, for example, additives used in existing all-solid secondary batteries, such as a filler, a coating agent, a dispersant, and/or an ion-conductive adjuvant.

**Anode: solid electrolyte**

The first anode active material layer 22 may further include a solid electrolyte. The solid electrolyte may be, for example, a material selected from solid electrolytes included in the solid electrolyte layer 30. The solid electrolyte included in the first anode active material layer 22 may act as a reaction point where the formation of lithium metal starts in the first anode active material layer 22, act as a space where the formed lithium metal is stored, and/or act as a path for the transfer of lithium ions. In some embodiments, the solid electrolyte may be omitted.

In the first anode active material layer 22, for example, the amount of the solid electrolyte may be large in an area adjacent to the solid electrolyte layer 30 and small in an area adjacent to the anode current collector 21. In the first anode active material layer 22, the solid electrolyte may have, for example, a concentration gradient in which the concentration decreases along a direction from the area adjacent to the solid electrolyte layer 30 to the area adjacent to the anode current collector 21.

**Anode: first anode active material layer**

A ratio B/A of an initial charge capacity B of the first anode active material layer 22 to an initial charge capacity A of the cathode active material layer 12 may be in a range of, for example, about 0.005 to about 0.45. The initial charge capacity of the cathode active material layer 12 may be determined from a $1^{st}$ open circuit voltage to a maximum charging voltage vs. Li/Li$^+$. The initial charge capacity of the first anode active material layer 22 may be determined from a $2^{nd}$ open circuit voltage to 0.01 V vs. Li/Li$^+$.

The maximum charging voltage may be determined depending on the type (or kind) of cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of $Li_2S$ or a $Li_2S$ composite may be 2.5 V vs. Li/Li+. For example, the maximum charging voltage of $Li_2S$ or a $Li_2S$ composite may be 3.0 V vs. Li/Li+. The ratio B/A of the initial charge capacity B of the first anode active material layer 22 to the initial charge capacity A of the cathode active material layer 12 may be in a range of, for example, about 0.01 to about 0.3, about 0.01 to about 0.2, or about 0.05 to about 0.1. The initial charge capacity (mAh) of the cathode active material layer 12 may be obtained by multiplying the charge specific capacity (mAh/g) of the cathode active material by the mass (g) of the cathode active material in the cathode active material layer 12. If various suitable types (or kinds) of cathode active materials are used, charge specific capacity x mass value may be calculated for each cathode active material, and the sum of these values may be the initial charge capacity of the cathode active material layer 12. Also, the initial charge capacity of the first anode active material layer 22 may be calculated in the same way. The initial charge capacity of the first anode active material layer 22 may be obtained by multiplying the charge specific capacity (mAh/g) of the anode active material by the mass of the anode active material in the first anode active material layer 22. If various suitable types (or kinds) of anode active materials are used, charge specific capacity x mass value may be calculated for each anode active material, and the sum of these values may be the initial charge capacity of the first anode active material layer 22. The charge specific capacity of each of the cathode active material and the anode active material may be measured by using an all-solid half-cell using lithium metal as a counter electrode. The initial charge capacity of each of the cathode active material layer 12 and the first anode active material layer 22 may be directly measured by using an all-solid half-cell at a constant current density, for example, a constant current density of 0.1 mA/cm$^2$. For the cathode, the measurement may be performed from the $1^{st}$ open circuit voltage (OCV) to the maximum charging voltage, e.g., an operating voltage of 3.0 V (vs. Li/Li$^+$). For the anode, the measurement may be performed from the $2^{nd}$ open circuit voltage (OCV) to, for example, an operating voltage of 0.01 V vs. lithium metal. For example, an all-solid half-cell having the cathode active material layer may be charged at a constant current of 0.1 mA/cm$^2$ from the $1^{st}$ open circuit voltage to 3.0 V, and an all-solid half-cell having the first anode active material layer may be charged at a constant current of 0.1 mA/cm$^2$ from the $2^{nd}$ open circuit voltage to 0.01 V. The current density during charging at a constant current may be, for example,

$0.2 \text{ mA/cm}^2$ or $0.5 \text{ mA/cm}^2$. The all-solid half-cell having the cathode active material layer may be charged, for example, from the $1^{st}$ open circuit voltage to 2.5 V, 2.0 V, 3.5 V, or 4.0 V. The maximum charging voltage of the cathode active material layer may be determined by the maximum voltage of a battery that satisfies the safety conditions in accordance with JISC8712:2015 of the Japanese Standards Association.

If the initial charge capacity of the first anode active material layer 22 is too small, the thickness of the first anode active material layer 22 becomes very thin, so that lithium dendrites formed between the first anode active material layer 22 and the anode current collector 21 during charging and discharging processes collapse the first anode active material layer 22, and thus, the cycle characteristics of the all-solid secondary battery 1 are hardly enhanced (or are not sufficiently improved). If the charging capacity of the first anode active material layer 22 is excessively increased, the energy density of the all-solid secondary battery 1 may decrease and the internal resistance of the all-solid secondary battery 1 due to the first anode active material layer 22 may increase, making it difficult for the all-solid secondary battery 1 to have enhanced cycle characteristics.

The thickness of the first anode active material layer 22 may be, for example, 50% or less, 40% or less, 30% or less, 20% or less, 10% or less, or 5% or less of the thickness of the cathode active material layer 12. The thickness of the first anode active material layer 22 may be in a range of, for example, about 1% to about 50%, about 1% to about 40%, about 1% to about 30%, about 1% to about 20%, about 1% to about 10%, or about 1% to about 5% of the thickness of the cathode active material layer 12. The thickness of the first anode active material layer 22 may be in a range of, for example, about 1 $\mu$m to about 20 $\mu$m, about 2 $\mu$m to about 15 $\mu$m, or about 3 $\mu$m to about 10 $\mu$m. If the thickness of the first anode active material layer 22 is too small, lithium dendrites formed between the first anode active material layer 22 and the anode current collector 21 collapse the first anode active material layer 22, making it difficult for the all-solid secondary battery 1 to have enhanced cycle characteristics. If the thickness of the first anode active material layer 22 is too large, the energy density of the all-solid secondary battery 1 may decrease and the internal resistance of the all-solid secondary battery 1 due to the first anode active material layer 22 may increase, making it difficult for the all-solid secondary battery 1 to have enhanced cycle characteristics. If the thickness of the first anode active material layer 22 decreases, for example, the initial charge capacity of the first anode active material layer 22 may also be reduced.

**Anode: second anode active material layer**

Referring to FIG. 3, the all-solid secondary battery 1 may further include, for example, a second anode active material layer 24 between the anode current collector 21 and the first anode active material layer 22, after charging. The second anode active material layer 24 may be a metal layer including lithium and/or a lithium alloy. The metal layer may include lithium and/or a lithium alloy. Therefore, the second anode active material layer 24 may act as, for example, a lithium reservoir because the second anode active material layer 24 is a lithium-containing metal layer. The lithium alloy may be, for example, a Li-Al alloy, a Li-Sn alloy, a Li-In alloy, a Li-Ag alloy, a Li-Au alloy, a Li-Zn alloy, a Li-Ge alloy, and/or a Li-Si alloy. However, the present disclosure is not limited thereto and any suitable lithium alloy used in the art may be used. The second anode active material layer 24 may be formed of one of these alloys and/or lithium, or may be formed of several types (or kinds) of alloys and/or lithium. The second anode active material layer 24 may be, for example, a plated layer. For example, the second anode active material layer 24 may be plated or deposited between the first anode active material layer 22 and the anode current collector 21 during the charging process of the all-solid secondary battery 1.

The thickness of the second anode active material layer 24 is not limited, but may be in a range of, for example, about 1 $\mu$m to about 500 $\mu$m, about 1 $\mu$m to about 200 $\mu$m, about 1 $\mu$m to about 150 $\mu$m, about 1 $\mu$m to about 100 $\mu$m, or about 1 $\mu$m to about 50 $\mu$m. If the thickness of the second anode active material layer 24 is too small, it may be difficult for the second anode active material layer 24 to function as a lithium reservoir. If the thickness of the second anode active material layer 24 is too large, the mass and volume of the all-solid secondary battery 1 may increase and the cycle characteristics of the all-solid secondary battery 1 may deteriorate.

In other embodiments, in the all-solid secondary battery 1, the second anode active material layer 24 may be, for example, between the anode current collector 21 and the first anode active material layer 22, before assembly of the all-solid secondary battery 1. If the second anode active material layer 24 is between the anode current collector 21 and the first anode active material layer 22 before assembly of the all-solid secondary battery 1, the second anode active material layer 24 acts as a lithium reservoir because the second anode active material layer 24 is a lithium-containing metal layer. For example, before the all-solid secondary battery 1 is assembled, lithium foil may be between the anode current collector 21 and the first anode active material layer 22.

If the secondary anode active material layer 24 is deposited by charging after assembly of the all-solid secondary battery 1, the energy density of the all-solid secondary battery 1 may increase because the second anode active material layer 24 is not included during assembly of the all-solid secondary battery 1. The all-solid secondary battery 1 may be charged at a charging capacity that exceeds that of the first anode active material layer 22. The first anode active material layer 22 may be overcharged. At the beginning of charging, lithium may be absorbed into the first anode active material layer 22. The anode active material included in the first anode active material layer 22 may form an alloy or compound with lithium ions that have migrated from the cathode 10. If charging is performed to greater than the capacity of the first anode active material layer 22, for example, lithium is deposited at a rear surface of the first anode active material layer 22, e.g., between the anode current collector 21 and the first anode active material layer 22, and a metal layer corresponding to the second anode active material layer 24 may be formed by the deposited lithium. The second anode active material layer 24 may be a metal layer mainly consisting of lithium (e.g., lithium metal). These results are obtained, for example, because the anode active material included in the first anode active material layer 22 includes a material that forms an alloy or compound with lithium. During discharge, lithium in the first anode active material layer 22 and the second anode active material layer 24, for example, the metal layer, is ionized and moves toward the cathode 10. Thus, it may be possible to use lithium as an anode active material in the all-solid secondary battery 1. In other embodiments, because the first anode active material layer 22 covers the second anode active material layer 24, the first anode active material layer 22 may serve as a protective layer for the second anode active material layer 24, for example, the metal layer, and at the same time (or concurrently), may serve to suppress or reduce the deposition and growth of lithium dendrites. Therefore, the short circuit and capacity reduction of the all-solid secondary battery 1 may be suppressed or reduced, resulting in enhanced cycle characteristics of the all-solid secondary battery 1. In other embodiments, if the second anode active material layer 24 is provided by charging after assembly of the all-solid secondary battery 1, the anode 20, e.g., the anode current collector 21, the first anode active material layer 22, and a region therebetween, may be a Li-free region that does not contain Li in an initial state or a completely discharged state of the all-solid secondary battery 1.

**Anode: anode current collector**

The anode current collector 21 may be made of a material that does not react with lithium, for example, a material that does not form either an alloy or a compound with lithium. Examples of materials constituting the anode current collector 21 may include copper (Cu), stainless steel, titanium (Ti), iron (Fe), cobalt (Co), and nickel (Ni), but the present disclosure is not limited thereto and any suitable electrode current collector used in the art may be used. The anode current collector 21 may be made of one of the above-described metals, an alloy of at least two of the metals, and/or a coating material. The anode current collector 21 may be, for example, in the form of a plate and/or foil.

Referring to FIG. 2, the all-solid secondary battery 1 may further include a thin film 23 containing an element capable of forming an alloy with lithium on one surface of the anode current collector 21. The thin film 23 may be between the anode current collector 21 and the first anode active material layer 22. The thin film 23 may include, for example, an element capable of forming an alloy with lithium. Examples of the element capable of forming an alloy with lithium may include gold, silver, zinc, tin, indium, silicon, aluminum, and bismuth, but the present disclosure is not limited thereto and any suitable element capable of forming an alloy with lithium in the art may be used. The thin film 23 may be formed of one of these metals and/or an alloy of several types (or kinds) of metals. By providing the thin film 23 on one surface of the anode current collector 21, for example, a deposition form of the second anode active material layer 24 deposited between the thin film 23 and the first anode active material layer 22 may become smoother, and the cycle characteristics of the all-solid secondary battery 1 may be further enhanced.

The thickness of the thin film 23 may be in a range of, for example, about 1 nm to about 800 nm, about 10 nm to about 700 nm, about 50 nm to about 600 nm, or about 100 nm to about 500 nm. If the thickness of the thin film 23 is less than 1 nm, it may be difficult for the thin film 23 to properly function. If the thickness of the thin film 23 is too large, the thin film 23 itself may absorb lithium, thereby reducing the amount of lithium deposited at the anode, and thus, the energy density of an all-solid battery 1 may be reduced and the cycle characteristics of the all-solid secondary battery 1 may deteriorate. The thin film 23 may be on the anode current collector 21 by, for example, vacuum deposition, sputtering, plating, and/or the like. However, the present disclosure is not limited to these methods and any suitable method for forming the thin film 23 in the art may be used.

In some embodiments, the anode current collector 21 may include, for example, a base film and a metal layer on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. By including an insulating thermoplastic polymer (e.g., an electrically insulating thermoplastic polymer), the base film softens and/or liquefies if a short circuit occurs, and thus a rapid increase in current may be suppressed or reduced by blocking or decreasing battery operation. The metal layer may include, for example, copper (Cu), stainless steel, titanium (Ti), iron (Fe), cobalt (Co), nickel (Ni), and/or an alloy thereof. The anode current collector 21 may further include a metal chip and/or a lead tab. More details on the base film, the metal layer, the metal chip, and the lead tab of the anode current collector 21 may be referred to those provided above in connection with the cathode current collector 11. If the anode current collector 21 has this structure, the weight of the anode may be reduced, resulting in improved energy density of the anode and the lithium battery.

**Solid electrolyte layer**

**Solid electrolyte layer: electrolyte**

Referring to FIGS. 1-5, the solid electrolyte layer 30 is between the cathode 10 and the anode 20, and includes a solid electrolyte separator. The solid electrolyte layer 30 may include, for example, a solid electrolyte, a gel electrolyte, or a combination thereof. The solid electrolyte separator may constitute 90 wt% to 100 wt%, 95 wt% to 100 wt% or 99 wt% to 100 wt% of total weight of the solid electrolyte layer 30. The solid electrolyte layer 30 for example may be formed of the solid electrolyte separator.

The solid electrolyte that is further included in the solid electrolyte layer 30 may be, for example, an oxide-based solid electrolyte, a polymer solid electrolyte, or a combination thereof.

The oxide-based solid electrolyte may be, for example, $Li_{1+x+y}Al_xTi_{2-x}Si_yP_{3-y}O_{12}$ where $0<x<2$ and $0\leq y<3$, $BaTiO_3$, $Pb(Zr,Ti)O_3(PZT)$, $Pb_{1-x}La_xZr_{1-y}Ti_yO_3(PLZT)$ where $0\leq x<1$ and $0\leq y<1$, $PB(Mg_3Nb_{2/3})O_3$-$PbTiO_3(PMN$-$PT)$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ where $0<x<2$ and $0<y<3$, $Li_xAl_yTi_z(PO_4)_3$ where $0<x<2$, $0<y<1$, and $0<z<3$, $Li_{1+x+y}(Al, Ga)_x(Ti, Ge)_{2-x}Si_yP_{3-y}O_{12}$ where $0\leq x\leq 1$ and $0\leq y\leq 1$, $Li_xLa_yTiO_3$ where $0<x<2$ and $0<y<3$, $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ where M = Te, Nb, or Zr, and $0\leq x\leq 10$, or a combination thereof. The oxide-based solid electrolyte may be prepared by, for example, a sintering method and/or the like.

The oxide-based solid electrolyte may be, for example, a garnet-type solid electrolyte (e.g., a solid electrolyte having a garnet crystal structure) selected from $Li_7La_3Zr_2O_{12}$ (LLZO) and $Li_{3+x}La_3Zr_{2-a}M_aO_{12}$ (M= doped LLZO, M=Ga, W, Nb, Ta, or Al, $0<a<2$, and $0\leq x\leq 10$).

The polymer solid electrolyte may include, for example, a mixture of a lithium salt and a polymer, and/or a polymer having an ion-conducting functional group. The polymer solid electrolyte may be, for example, a polyelectrolyte in a solid state at 25 °C and 1 atm. The polymer solid electrolyte may not include, for example, liquid. The polymer solid electrolyte may include a polymer, and examples of the polymer may include polyethylene oxide (PEO), polyvinylidene fluoride (PVDF), vinylidene fluoridehexafluoropropylene (PVDF-HFP), polyethylene oxide (PEO), a poly(styrene-b-ethylene oxide) block copolymer (PS-PEO), poly(styrene-butadiene), poly(styreneisoprene-styrene), a poly(styrene-b-divinylbenzene) block copolymer, a poly(styreneethyleneoxide-styrene) block copolymer, polystyrene sulfonate (PSS), polyvinyl fluoride (PVF), polymethyl methacrylate (PMMA), polyethylene glycol (PEG), polyacrylonitrile ( PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly [bis(benzimidazobenzisoquinolinones)], (SPBIBI), poly(styrene sulfonate) (PSS), lithium 9,10-diphenylanthracene-2-sulfonate (DPASLi$^+$), or a combination thereof. However, the present disclosure is not limited thereto and any suitable solid electrolyte used in the art may be used. The lithium salt may be any suitable lithium salt that may be used in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ where x and y are each 1 to 20, LiCl, Lil, or a mixture thereof. The polymer included in the polymer solid electrolyte may be, for example, a compound containing 10 or more, 20 or more, 50 or more, or 100 or more repeating units. The weight average molecular weight of the polymer included in the polymer solid electrolyte may be, for example, 1,000 Daltons or more, 10,000 Daltons or more, 100,000 Daltons or more, or 1,000,000 Daltons or more.

The gel electrolyte may be, for example, a polymer gel electrolyte. For example, the gel electrolyte may be in a gel state without including polymers.

For example, the polymer gel electrolyte may include a liquid electrolyte and a polymer, and/or may include an organic solvent and a polymer having an ion-conducting functional group. The polymer gel electrolyte may be, for example, a polyelectrolyte is in a gel state at 25 °C and 1 atm. For example, the polymer gel electrolyte may not include liquid and may be in a gel state. A liquid electrolyte used in the polymer gel electrolyte may be, for example, an ionic liquid, a mixture of a lithium salt and an organic solvent, a mixture of a lithium salt and an organic solvent, a mixture of an ionic liquid and an organic solvent, or a mixture of a lithium salt, an ionic liquid, and an organic solvent. The polymer used in the polymer gel electrolyte may be selected from polymers used in the solid polymer electrolyte. The organic solvent may be selected from organic solvents used in the liquid electrolyte. The lithium salt may be selected from lithium salts used in the solid polymer electrolyte. The term ionic liquid may refer to a salt in a liquid state at room temperature or a room temperature molten salt that has a melting point below room temperature and consists only of ions. The ionic liquid may include, for example, at least one selected from compounds including: a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, the polymer solid electrolyte may be impregnated into a liquid electrolyte in a secondary battery, thereby forming a polymer gel electrolyte. The polymer gel electrolyte may further include inorganic particles. The polymer included in the polymer gel electrolyte may be, for example, a compound containing 10 or more, 20 or more, 50 or more, or 100 or more repeating units. The weight average molecular weight of the polymer included in the polymer gel electrolyte may be, for example, 500 Daltons or more, 1,000 Daltons or more, 10,000 Daltons or more, 100,000 Daltons or more, or 1,000,000 Daltons or more.

**Method of manufacturing solid electrolyte separator**

A method of manufacturing a solid electrolyte separator, according to one or more embodiments, includes: providing a composite of $Li_2S$ and a lithium salt; providing a sulfide-based solid electrolyte; mixing together the composite of $Li_2S$ and the lithium salt and the sulfide-based solid electrolyte to prepare a mixture; and molding the mixture to prepare a solid electrolyte separator. The composite of $Li_2S$ and the lithium salt may be represented by $Li_2S-Li_aX_b$ where $1 \leq a \leq 5$ and $1 \leq b \leq 5$. X may be I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCl, $NCl_2$, $BN_2$, or a combination thereof.

A composite of $Li_2S$ and a lithium salt may be provided.

The composite of $Li_2S$ and the lithium salt may be prepared, for example, by mechanically milling $Li_2S$ and the lithium salt. The milling conditions are not limited, and any suitable conditions that allow the formation of the composite of $Li_2S$ and the lithium salt may be used. $Li_2S$ particles and the lithium salt are added into a ball mill and stirred at a speed of about 100 rpm to about 1,000 rpm for about 1 hour to about 20 hours to prepare a composite of $Li_2S$ and the lithium salt. The stirring may be performed one or more times.

The lithium salt may include, for example, LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof.

A sulfide-based solid electrolyte may be provided. The sulfide-based solid electrolyte may be as described above in connection with the solid electrolyte separator.

The composite of $Li_2S$ and the lithium salt may be mixed together with the sulfide-based solid electrolyte to prepare a mixture.

A mixing ratio of the composite of $Li_2S$ and the lithium salt to the sulfide-based solid electrolyte may be in a range of, for example, about 50:50 to about 95:5, about 50:50 to about 90:10, about 50:50 to about 80:20, or about 50:50 to about 70:30.

The mixture may further include a process solvent. By further including a process solvent, the mixture may be in the form of a slurry. The solvent may be, for example, octyl acetate, but the present disclosure is not limited thereto and any suitable solvent used in the art may be used. In other embodiments, the mixture may not include a process solvent and may be prepared in a dry manner (e.g., may be prepared utilizing a dry process).

The prepared mixture may be molded to prepare a solid electrolyte separator.

For example, a wet mixture in the form of a slurry may be coated onto a substrate and dried, to thereby manufacture a solid electrolyte separator in the form of a sheet. The solid electrolyte separator may be separated from the substrate for preparation.

In other embodiments, a dry mixture not including a solvent may be put into an extruder and extruded to thereby manufacture a solid electrolyte separator in the form of a sheet.

Embodiments of the present disclosure will be described in further detail with reference to the following examples and comparative examples. However, these examples are provided for illustrative purposes only and are not intended to limit the scope of the present disclosure.

Preparation of composite of $Li_2S$ and a lithium salt

Preparation Example 1: **$Li_2S$-LiI** composite

$Li_2S$ and LiI were mixed together in a weight ratio of 30:20. The mixture was mechanically milled by using a ball mill to prepare a $Li_2S$-LiI composite. The milling conditions were as follows: at 25 °C and 600 rpm for 10 hours.

The size of particles of the $Li_2S$-LiI composite was less than 1 $\mu$m. The size of particles of the $Li_2S$-LiI composite was calculated by software from a scanning electron microscope image of $Li_2S$-LiI composite powder. The size of particles of the $Li_2S$-LiI composite was an average particle diameter D50.

The Mohs hardness of the $Li_2S$ was 0.6, and the Mohs hardness of the LiI was 2.0. The Mohs hardness of the $Li_2S$-LiI composite was less than 2.

**Preparation Example 2: $Li_2S$-LiBr composite**

A $Li_2S$-LiBr composite was prepared in substantially the same manner as in Preparation Example 1, except that LiBr was used instead of LiI.

### Preparation Example 3: Li$_2$S-LiCl composite

A Li$_2$S-LiCl composite was prepared in substantially the same manner as in Preparation Example 1, except that LiCl was used instead of LiI.

### Comparative Preparation Example 1: Simple mixture of Li$_2$S and LiBr

A mixture of Li$_2$S and LiI in a weight ratio of 30:20 was used.

### Preparation of Li$_2$S-LiI-CNF cathode active material

### Preparation Example 4: Li$_2$S-LiI-CNF

Li$_2$S and LiI were mixed together in a weight ratio of 30:20. The mixture was mechanically milled by using a ball mill to prepare a Li$_2$S-LiI composite. The milling conditions were as follows: at 25 °C and 510 rpm for 10 hours.
The Li$_2$S-LiI composite and carbon nanofibers (CNFs) were mixed together in a weight ratio of 50:10. The mixture was mechanically milled by using a ball mill to prepare a Li$_2$S-LiI-CNF composite. The milling conditions were as follows: at 25 °C and 510 rpm for 10 hours.
The Li$_2$S-LiI-CNF composite was used as a composite cathode active material.

### Manufacture of solid electrolyte separator

### Example 1: Solid electrolyte: Li$_2$S-LiI composite = weight ratio of 99:1

1 part by weight of the Li$_2$S-LiI composite prepared according to Preparation Example 1 and 1.5 parts by weight of an acrylic binder, with respect to 99 parts by weight of the solid electrolyte were added to argyrodite-type crystals Li$_6$PS$_5$Cl as a solid electrolyte (D$_{50}$=3.0 μm, crystalline), to prepare a mixture. Octyl acetate was added to the prepared mixture and stirred to prepare a slurry. The prepared slurry was applied using a bar coater onto 15 μm-thick non-woven fabric placed on a PET substrate, and dried in air at 80 °C for 10 minutes to prepare a laminate. The prepared laminate was vacuum-dried at 80 °C for 2 hours, and then separated from the substrate to thereby complete the manufacture of a solid electrolyte separator. The solid electrolyte separator was a self-standing film. The solid electrolyte separator may be slightly bent by applying force from both sides thereof, and may be restored to its original shape if the applied force is removed. The solid electrolyte separator was ready to be used as a solid electrolyte layer.

### Example 2: Solid electrolyte: Li$_2$S-LiI composite = weight ratio of 97:3

A solid electrolyte separator was manufactured in substantially the same manner as in Example 1, except that 3 parts by weight of the Li$_2$S-LiI composite prepared according to Preparation Example 1 and 1.5 parts by weight of an acrylic binder, with respect to 97 parts by weight of the solid electrolyte were used.

### Example 3: Solid electrolyte: Li$_2$S-LiI composite = weight ratio of 95:5

A solid electrolyte separator was manufactured in substantially the same manner as in Example 1, except that 5 parts by weight of the Li$_2$S-LiI composite prepared according to Preparation Example 1 and 1.5 parts by weight of an acrylic binder, with respect to 95 parts by weight of the solid electrolyte were used.

### Example 4: Solid electrolyte: Li$_2$S-LiI composite = weight ratio of 90:10

A solid electrolyte separator was manufactured in substantially the same manner as in Example 1, except that 10 parts by weight of the Li$_2$S-LiI composite prepared according to Preparation Example 1 and 1.5 parts by weight of an acrylic binder, with respect to 90 parts by weight of the solid electrolyte were used.

### Example 5: Solid electrolyte: Li$_2$S-LiBr composite = weight ratio of 99:1

A solid electrolyte separator was manufactured in substantially the same manner as in Example 1, except that the Li$_2$S-LiBr composite prepared according to Preparation Example 2 was used instead of the Li$_2$S-LiI composite prepared according to Preparation Example 1.

### Example 6: Solid electrolyte: $Li_2S$-LiCl composite = weight ratio of 99:1

A solid electrolyte separator was manufactured in substantially the same manner as in Example 1, except that the $Li_2S$-LiCl composite prepared according to Preparation Example 3 was used instead of the $Li_2S$-LiI composite prepared according to Preparation Example 1.

### Comparative Example 1: Solid electrolyte alone

A solid electrolyte separator was manufactured in substantially the same manner as in Example 1, except that an acrylic binder was used in an amount of 1.5 parts by weight with respect to 100 parts by weight of a solid electrolyte. The $Li_2S$-LiI composite was not used.

### Comparative Example 2: Solid electrolyte: $Li_2S$ = weight ratio of 99:1

A solid electrolyte separator was manufactured in substantially the same manner as in Example 1, except that $Li_2S$ was used instead of the $Li_2S$-LiI composite prepared according to Preparation Example 1.

### Comparative Example 3: Solid electrolyte: LiI = weight ratio of 99:1

A solid electrolyte separator was manufactured in substantially the same manner as in Example 1, except that LiI was used instead of the $Li_2S$-LiI composite prepared according to Preparation Example 1.

### Comparative Example 4: Solid electrolyte: mixture of $Li_2S$ and LiI = weight ratio of 99:1

A solid electrolyte separator was manufactured in substantially the same manner as in Example 1, except that the simple mixture of $Li_2S$ and LiI prepared in Comparative Preparation Example 1, was used instead of the $Li_2S$-LiI composite prepared according to Preparation Example 1.

### Manufacture of secondary battery

### Example 7: Sulfide-based cathode active material ($Li_2S$-LiI-CNF)

### Manufacture of cathode

The $Li_2S$-LiI-CNF composite prepared according to Preparation Example 4 was prepared as a cathode active material. Argyrodite-type crystals $Li_6PS_5Cl$ (D50=3.0 $\mu$m, crystalline) were prepared as a solid electrolyte. PTFE was prepared as a binder. The composite cathode active material, the solid electrolyte, and the binder were mixed together in a weight ratio of 60:40:1.2 to prepare a cathode mixture. The cathode mixture may be obtained by dry mixing using a ball mill.
The cathode mixture was provided on one side of a cathode current collector made of carbon-coated aluminum foil, followed by plate pressing at a pressure of 200 MPa for 10 minutes, to thereby complete the manufacture of a cathode. The thickness of the cathode was about 120 $\mu$m. The thickness of the cathode active material layer was about 100 $\mu$m, and the thickness of the carbon-coated aluminum foil was about 20 $\mu$m. The cathode active material had the same area as the cathode current collector.

### Manufacture of anode

SUS foil having a thickness of 10 $\mu$m was prepared as an anode current collector. Carbon black (CB) having a primary particle diameter of about 30 nm and silver (Ag) particles having an average particle diameter of about 60 nm were prepared as anode active materials.
4 g of mixed powder in which the carbon black (CB) and the silver (Ag) particles were mixed together in a weight ratio of 3:1 was placed in a container, and 4 g of an NMP solution including 7 wt% of a PVDF binder (# 9300 from Kureha) was added thereto to prepare a mixed solution. While NMP was added little by little to the mixed solution, the mixed solution was stirred to prepare a slurry. The prepared slurry was applied onto a SUS sheet by using a bar coater and dried in the air at 80 °C for 10 minutes, followed by vacuum drying at 40 °C for 10 hours, to prepare a laminate. The prepared laminate was cold-roll pressed to planarize the surface to prepare an anode having a first anode active material layer/anode current collector structure. The thickness of the first anode active material layer was about 15 $\mu$m. The first anode active material layer had the same area as the anode current collector.

**Preparation of solid electrolyte layer**

The solid electrolyte separator manufactured according to Example 1 was used as a solid electrolyte layer.

**Inactive member**

A slurry, in which cellulose fiber, glass fiber, aluminum hydroxide ($Al(OH)_3$), an acrylic binder, and a solvent were mixed together, was molded into a gasket shape, and then the solvent was removed therefrom, to manufacture a flame-retardant inactive member.

A weight ratio of the cellulose fiber, the glass fiber, the aluminum hydroxide ($Al(OH)_3$), and the acrylic binder was 20:8:70:2. The thickness of the inactive member was 120 $\mu$m.

The manufactured flame-retardant inactive member was heat-treated in vacuum at 80 °C for 5 hours before being provided on the solid electrolyte layer to remove moisture and the like from the flame-retardant inactive member.

**Manufacture of all-solid secondary battery**

As illustrated in FIG. 4, a solid electrolyte layer was on an anode so that a first anode active material layer was in contact (e.g., physical contact) with the solid electrolyte layer, and a cathode was on the solid electrolyte layer. A gasket surrounding the cathode and in contact (e.g., physical contact) with the solid electrolyte layer was placed around the cathode to prepare a stack. The thickness of the gasket was about 120 $\mu$m. The flame-retardant inactive member was used as a gasket. The gasket was provided to be in contact (e.g., physical contact) with a side surface of the cathode and the solid electrolyte layer. The cathode was on a central portion of the solid electrolyte layer, and the gasket was provided to surround the cathode and extend to an end portion of the solid electrolyte layer. The area of the cathode was about 90% of the area of the solid electrolyte layer, and the gasket was on the remaining 10% of the total area of the solid electrolyte layer, on which the cathode was not provided.

The prepared stack was plate pressed at 85 °C and a pressure of 500 MPa for 30 minutes. The solid electrolyte layer was sintered through such pressing, thus improving battery characteristics. The thickness of the sintered solid electrolyte layer was about 45 $\mu$m. Argyrodite-type crystals $Li_6PS_5Cl$, which is a solid electrolyte, included in the sintered solid electrolyte layer had a density of 1.6 g/cc. The solid electrolyte layer had the same area as the anode.

The pressed stack was placed in a pouch and vacuum-sealed to thereby complete the manufacture of an all-solid secondary battery. Parts of a cathode current collector and an anode current collector were extended outside the sealed battery and used as a cathode tab and an anode tab.

**Examples 8 to 12: Sulfide-based cathode active material ($Li_2S$-LiI-CNF)**

All-solid secondary batteries were manufactured in substantially the same manner as in Example 7, except that the solid electrolyte separators manufactured according to Examples 2 to 6, respectively, were used.

**Comparative Examples 5 to 8: Sulfide-based cathode active material ($Li_2S$-LiI-CNF)**

All-solid secondary batteries were manufactured in substantially the same manner as in Example 7, except that the solid electrolyte separators manufactured according to Comparative Examples 1 to 4, respectively, were used.

**Example 13: Oxide-based cathode active material (NCA)**

**Preparation of cathode layer**

$LiNi_{0.8}Co_{0.15}Al_{0.05}O_2$ (NCA) coated with $Li_2O$-$ZrO_2$ (LZO) was prepared as a cathode active material. The LZO-coated cathode active material was prepared according to a method disclosed in Korean Patent Publication No. 10-2016-0064942. Argyrodite-type crystals $Li_6PS_5Cl$ (D50 = 0.5 $\mu$m, crystalline) were prepared as a solid electrolyte. A polytetrafluoroethylene (PTFE) binder was prepared as a binder. Carbon nanofibers (CNFs) were prepared as a conductive agent. The cathode active material, the solid electrolyte, the conductive agent, and the binder were mixed together in a weight ratio of 84:11.5:3:1.5 together with a xylene solvent to prepare a slurry, and the slurry was formed into a sheet form, and then vacuum-dried at 40 °C for 8 hours, thereby completing the manufacture of a cathode sheet. The manufactured cathode sheet was on a carbon layer of a cathode current collector made of aluminum foil having the carbon layer formed on one surface thereof, followed by heated roll pressing at 85 °C, to thereby complete the preparation of a cathode layer. The total thickness of the cathode layer was about 120 $\mu$m. The thickness of a cathode active material layer was about 95 $\mu$m, and the thickness of the carbon-coated aluminum foil was about 25 $\mu$m.

**Manufacture of all-solid secondary battery**

An anode, a solid electrolyte layer, an inactive member, and an all-solid secondary battery were manufactured in substantially the same manner as in Example 1, except that the above-described cathode was used.

**Comparative Example 9: Oxide-based cathode active material (NCA)**

An all-solid secondary battery was manufactured in substantially the same manner as in Example 13, except that the solid electrolyte separator manufactured according to Comparative Example 1 was used.

**Evaluation Example 1: XRD analysis and scanning electron microscopy**

XRD spectra of bare $Li_2S$ used in Preparation Example 1, the pulverized $Li_2S$, and the $Li_2S$-LiI composite prepared according to Preparation Example 1 were measured by using Cu K$\alpha$ radiation. The measurement results thereof are shown in Table 1.

In the XRD spectra, the size and lattice constant of $Li_2S$ crystallites were derived from a first peak for the (111) crystal plane appearing at a diffraction angle of $2\theta = 27° \pm 2.0°$.

The pulverized $Li_2S$ was prepared by milling under substantially the same conditions, except that the mixture of $Li_2S$ and LiI in a weight ratio of 30:20, used in Preparation Example 1, was changed to 50 parts by weight of $Li_2S$.

The particle sizes (e.g., particle size D50) of the bare $Li_2S$ used in Preparation Example 1, the pulverized $Li_2S$, and the $Li_2S$-LiI composite prepared according to Preparation Example 1 were measured by using a particle size analyzer (PSA) using a laser, and the size of $Li_2S$ particles of the composite was measured by using a scanning electron microscope. The measurement results thereof are shown in Table 1.

Table 1

|  | Size of $Li_2S$ crystallites [nm] | Size of $Li_2S$ particles [$\mu$m] |
|---|---|---|
| bare $Li_2S$ | 65 | 8 |
| Pulverized $Li_2S$ | 15 | - |
| $Li_2S$-LiI composite | less than 10 | less than 1 |

As shown in Table 1, the sizes of $Li_2S$ particles and crystallites of the $Li_2S$-LiI composite were remarkably reduced compared to the bare $Li_2S$.
the lattice constant of the $Li_2S$-LiI composite of Preparation Example 1 was greater than the lattice constant of the bare $Li_2S$. The increase in the lattice constant of the $Li_2S$-LiI composite compared to the lattice constant of the bare $Li_2S$ was determined to be due to LiI being dissolved in $Li_2S$ crystals. Therefore, it was confirmed that the $Li_2S$-LiI composite formed a solid solution.

The particle size of the $Li_2S$-LiI composite of Example 1 was about 2 $\mu$m or less.

**Evaluation Example 2: Porosity measurement**

The porosity of each of the solid electrolyte separators manufactured according to Example 1 and Comparative Example 1 was measured, and the measurement results thereof are shown in Table 2.

The porosity of each solid electrolyte separator was calculated utilizing ultrasonic analysis. Each solid electrolyte separator was mapped through ultrasound, and an ultrasound image of the cross-section of each solid electrolyte separator including pores was obtained. The porosity was measured by calculating the area of pores with respect to the total cross-sectional area.

Table 2

|  | Porosity [%] |
|---|---|
| Example 1 ($Li_2S$-LiI 1 wt%) | 3 |
| Comparative Example 1 ($Li_2S$-LiI 0 wt%) | 10 |

As shown in Table 2, the solid electrolyte separator of Example 1 had reduced porosity compared to the solid electrolyte separator of Comparative Example 1.

**Evaluation Example 3: Charge/discharge test**

The charge/discharge characteristics of each of the all-solid secondary batteries of Examples 7 to 12 and Comparative Examples 5 to 8 employing the solid electrolyte separators manufactured according to Examples 1 to 6 and Comparative Examples 1 to 4, respectively, were evaluated by the following charge/discharge test.

The charge/discharge test was performed by placing each all-solid secondary battery in a thermostat at 45 °C.

In the 1st cycle, each battery was charged at a constant current of 0.1 C for 12.5 hours until the voltage reached 2.5 V to 2.8 V. Subsequently, each battery was discharged at a constant current of 0.1 C for 12.5 hours until the voltage reached 0.3 V.

The charge/discharge characteristics of the all-solid secondary battery manufactured according to Example 13 was evaluated by the following charge/discharge test. The charge/discharge test was performed by placing the all-solid secondary battery in a thermostat at 45 °C.

In the 1st cycle, each battery was charged at a constant current of 0.6 mA/cm$^2$ for 12.5 hours until the voltage reached 3.9 V to 4.25 V. Subsequently, the battery was discharged at a constant current of 0.6 mA/cm$^2$ for 12.5 hours until the voltage reached 2.5 V.

The discharge capacity in the 1st cycle was denoted as the standard capacity.

After the 2nd cycle, charging and discharging were performed up to 150 cycles under substantially the same conditions as the 1st cycle. The measurement results thereof are shown in Table 3.

The number of cycles refers to the number of cycles required for the discharge capacity to decrease by 80% of the standard capacity after the 2nd cycle. A greater number of cycles indicates excellent lifespan characteristics.

Table 3

| | Number of cycles [times] |
|---|---|
| Example 7 (Li$_2$S-LiI 1 wt%, Li$_2$S active material) | 250 |
| Example 8 (Li$_2$S-LiI 3 wt%, Li$_2$S active material) | 220 |
| Example 9 (Li$_2$S-LiI 5 wt%, Li$_2$S active material) | 200 |
| Example 10 (Li$_2$S-LiI 10 wt%, Li$_2$S active material) | 150 |
| Example 11 (Li$_2$S-LiI 1 wt%, Li$_2$S active material) | 180 |
| Example 12 (Li$_2$S-LiCl 1 wt%, Li$_2$S active material) | 140 |
| Example 13 (Li$_2$S-LiI 1 wt%, NCA active material) | 450 |
| Comparative Example 5 (Li$_2$S-LiI 0 wt%, Li$_2$S active material) | 50 |
| Comparative Example 6 (Li$_2$S alone 1 wt%, Li$_2$S active material) | 35 |
| Comparative Example 7 (LiI alone 1 wt%, Li$_2$S active material) | 70 |
| Comparative Example 8 (simple mixture of Li$_2$S + LiI 1 wt%, Li$_2$S active material) | 90 |
| Comparative Example 9 (Li$_2$S-LiI 0 wt%, NCA active material) | 350 |

As shown in Table 3, the all-solid secondary batteries of Examples 7 to 12 employing the solid electrolyte separators of Examples 1 to 6, respectively, exhibited improved lifespan characteristics, compared to the all-solid secondary batteries of Comparative Examples 5 to 8 employing the solid electrolyte separators of Comparative Examples 1 to 4, respectively.

The all-solid secondary battery of Example 13 exhibited improved lifespan characteristics compared to the all-solid secondary battery of Comparative Example 9.

It was determined that this is because, by including the Li$_2$S-lithium salt composites in the solid electrolyte separators employed in the all-solid secondary batteries of Examples 7 to 13, the formation of pinholes was suppressed, and defects, such as a short circuit, caused by the growth of lithium dendrites through the pinholes were suppressed, resulting in improved durability of the solid electrolyte separators.

It was confirmed that, in each of the all-solid secondary batteries of Examples 7 to 12, a lithium metal layer, which is a second anode active material layer, was formed between a first anode active material layer and an anode current collector after the initial charging. This was confirmed through scanning electron microscope images of the cross-sections of the all-solid secondary batteries. It was also confirmed through a scanning electron microscope image of the cross-section of each solid electrolyte layer that the Li$_2$S-LiI composite was provided in pores between a plurality of sulfide-based solid electrolyte particles.

**Evaluation Example 4: Evaluation of high-rate characteristics**

The high-rate characteristics of each of the all-solid secondary batteries of Examples 7 to 12 and Comparative Examples 5 to 8 employing the solid electrolyte separators manufactured according to Examples 1 to 6 and Comparative Examples 1 to 4, respectively, were evaluated by the following charge/discharge test. The charge/discharge test was performed by placing each all-solid secondary battery in a thermostat at 45 °C.

Each of the all-solid secondary batteries manufactured according to Examples 7 to 12 and Comparative Examples 5 to 8 was charged at a constant current of 0.1 C rate and 45 °C until the voltage reached 2.5 V (vs. Li), and cut-off at a current of 0.05 C rate while maintaining a constant voltage of 2.5 V. Subsequently, each battery was discharged at a constant current of 0.1 C rate until the voltage reached 0.3 V (vs. Li) (formation cycle).

Each battery having undergone the formation cycle was charged at a constant current of 0.2 C rate and 45 °C until the voltage reached 2.5 V (vs. Li). Subsequently, each battery was discharged at a constant current of 0.2 C rate until the voltage reached 0.3 V (vs. Li) (1st cycle).

Each battery having undergone the 1st cycle was charged at a constant current of 0.2 C rate and 45 °C until the voltage reached 2.5 V (vs. Li). Subsequently, each battery was discharged at a constant current of 0.33 C rate until the voltage reached 0.3 V (vs. Li) (2nd cycle).

Each battery having undergone the 2nd cycle was charged at a constant current of 0.2 C rate and 45 °C until the voltage reached 2.5 V (vs. Li). Subsequently, each battery was discharged at a constant current of 0.5 C rate until the voltage reached 0.3 V (vs. Li) (3rd cycle).

Each battery having undergone the 3rd cycle was charged at a constant current of 0.2 C rate and 45 °C until the voltage reached 2.5 V (vs. Li). Subsequently, each battery was discharged at a constant current of 1.0 C rate until the voltage reached 0.3 V (vs. Li) (4th cycle).

In all the charge/discharge cycles, a rest period of 10 minutes was set after one charging/discharging cycle. Parts of the experimental results of charging/discharging at room temperature are shown in Table 4. The high-rate characteristics are defined by Equation 1.

High-rate characteristics [%] = [discharge capacity in the 4th cycle/discharge capacity in the 1st cycle] $\times$ 100          Equation 1

Table 4

| | High-rate characteristics (1 C/0.2 C) [%] |
|---|---|
| Example 7 ($Li_2S$-LiI 1 wt%) | 87 |
| Example 8 ($Li_2S$-LiI 3 wt%) | 84 |
| Example 9 ($Li_2S$-LiI 5 wt%) | 82 |
| Example 10 ($Li_2S$-LiI 10 wt%) | 78 |
| Example 11 ($Li_2S$-LiBr 1 wt%) | 81 |
| Example 12 ($Li_2S$-LiCl 1 wt%) | 78 |
| Comparative Example 5 ($Li_2S$-LiI 0 wt%) | 70 |
| Comparative Example 6 ($Li_2S$ alone 1 wt%) | 65 |
| Comparative Example 8 (LiI alone 1 wt%) | 73 |
| Comparative Example 8 (Simple mixture of $Li_2S$ + LiI 1 wt%) | 73 |

As shown in Table 4, the all-solid secondary batteries of Examples 7 to 12 employing the solid electrolyte separators of Examples 1 to 6, respectively, exhibited improved high-rate characteristics, compared to the all-solid secondary batteries of Comparative Examples 5 to 8 employing the solid electrolyte separators of Comparative Examples 1 to 4, respectively.

According to one or more embodiments, an all-solid secondary battery having improved cycle characteristics by including a solid electrolyte separator including a composite of $Li_2S$ and a lithium salt can be provided.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that various changes in form and details may be made therein without departing from the scope of the present disclosure as defined by the following claims.

**Claims**

1. A solid electrolyte separator comprising:

   a composite of $Li_2S$ and a lithium salt; and
   a sulfide-based solid electrolyte,
   wherein the composite of $Li_2S$ and the lithium salt is represented by $Li_2S$-$Li_aX_b$ where $1 \leq a \leq 5$ and $1 \leq b \leq 5$, and X is I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCl, $NCl_2$, $BN_2$, or a combination thereof.

2. The solid electrolyte separator as claimed in claim 1, wherein the lithium salt comprises a binary compound and/or a ternary compound,

   wherein the binary compound comprises LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, or a combination thereof, and
   the ternary compound comprises $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof.

3. The solid electrolyte separator as claimed in claim 1, wherein the composite comprises a solid solution of $Li_2S$ and the lithium salt, and a size of $Li_2S$ crystallites obtained from an XRD spectrum of the composite is 20 nm or less and/or in the composite, an amount of the $Li_2S$ is greater than an amount of the lithium salt, and a molar ratio of the $Li_2S$ to the lithium salt is in a range of about 51:49 to about 95:5.

4. The solid electrolyte separator as claimed in any of the claims 1 to 3, wherein the composite has a smaller Mohs hardness than the lithium salt,
   wherein the Mohs hardness of the composite is less than 2.

5. The solid electrolyte separator as claimed in any of the claims 1 to 4, wherein an amount of the composite is in a range of about 0.1 wt% to about 20 wt% with respect to a total weight of the composite and the sulfide-based solid electrolyte.

6. The solid electrolyte separator as claimed in any of the claims 1 to 5, wherein the solid electrolyte separator comprises composite particles and a plurality of sulfide-based solid electrolyte particles, wherein the sizes of said particles are measured with the method as indicated in the description,

   wherein the composite particles have a smaller size than the sulfide-based solid electrolyte particles, and
   the composite particles are provided in pores between the plurality of sulfide-based solid electrolyte particles, whereby preferably the solid electrolyte separator has a porosity of 8% or less and/or
   the sulfide-based solid electrolyte particles have a size of about 1 $\mu$m to about 10 $\mu$m,
   the composite particles have a size of 2 $\mu$m or less, and
   a ratio of the size of the sulfide-based solid electrolyte particles to the size of the composite particles is in a range of about 2:1 to about 200:1.

7. The solid electrolyte separator as claimed in in any of the claims 1 to 6,

   wherein the sulfide-based solid electrolyte comprises at least one selected from $Li_2S$-$P_2S_5$, $Li_2S$-$P_2S_5$-LiX where X is a halogen element, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_S$-$Z_mS_n$ where m and n are positive numbers and Z is Ge, Zn, or Ga, $Li_2S$-$GeS_2$, $Li_2S$-$SiS_2$-$Li_3PO_4$, $Li_2S$-$SiS_2$-$Li_pMO_q$ where p and q are positive numbers and M is one selected from P, Si, Ge, B, Al, Ga, and In, $Li_{7-x}PS_{6-x}Cl_x$ where $0 \leq x \leq 2$, $Li_{7-x}PS_{6-x}Br_x$ where $0 \leq x \leq 2$, and $Li_{7-x}PS_{6-x}I_x$ where $0 \leq x \leq 2$, and
   the sulfide-based solid electrolyte comprises an argyrodite-type solid electrolyte,
   wherein the argyrodite-type solid electrolyte comprises at least one selected from $Li_6PS_5Cl$, $Li_6PS_5Br$, and $Li_6PS_5I$, and

the argyrodite-type solid electrolyte has a density of about 1.5 g/cc to about 2.0 g/cc.

8. The solid electrolyte separator as claimed in any of the claims 1 to 7,

wherein the solid electrolyte separator further comprises a binder,
the solid electrolyte separator is free of a carbon-based conductive material,
the solid electrolyte separator is a self-standing film, and
the solid electrolyte separator has a curvature greater than 0.

9. An all-solid secondary battery (1) comprising:

a cathode (10); an anode (20); and a solid electrolyte layer (30) between the cathode (10) and the anode (20),
wherein the solid electrolyte layer (30) comprises the solid electrolyte separator according to claim 1.

10. The all-solid secondary battery (1) as claimed in claim 9,

wherein the cathode (10) comprises a cathode active material,
wherein the cathode active material comprises a sulfide-based cathode active material, an oxide-based cathode active material, or a combination thereof,
wherein the sulfide-based cathode active material comprises nickel sulfide, copper sulfide, $Li_2S$, a $Li_2S$-containing composite, or a combination thereof, and
the oxide-based cathode active material comprises a lithium transition metal oxide, a metal oxide, or a combination thereof, the lithium transition metal oxide comprising lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof, and the metal oxide comprising iron oxide, vanadium oxide, or a combination thereof.

11. The all-solid secondary battery (1) as claimed in claim 9 or 10, wherein the anode (20) comprises an anode current collector (21) and a first anode active material layer (22) on one surface of the anode current collector (21), whereby preferably the first anode active material layer (22) is a metal layer, the metal layer comprising lithium and/or a lithium alloy, or

the first anode active material layer (22) comprises an anode active material and a binder, the anode active material having a particle form and an average particle diameter of 4 $\mu$m or less, wherein said average particle diameter refers to the cumulative volume of 50% calculated from particles having the smallest particle size in the particle size distribution measured by a laser diffraction method;
whereby preferably the anode active material comprises at least one selected from a carbon-based anode active material and a metal and/or metalloid anode active material,
wherein the carbon-based anode active material comprises amorphous carbon, crystalline carbon, porous carbon, or a combination thereof, and
the metal and/or metalloid anode active material comprises gold (Au), platinum (Pt), palladium (Pd), silicon (Si), silver (Ag), aluminum (Al), bismuth (Bi), tin (Sn), zinc (Zn), or a combination thereof, and
the anode active material comprises a mixture of primary particles consisting of amorphous carbon and secondary particles consisting of a metal and/or a metalloid,
wherein an amount of the secondary particles is in a range of about 1 wt% to about 60 wt% with respect to a total weight of the mixture.

12. The all-solid secondary battery (1) as claimed in any of the claims 9 to 11, further comprising a second anode active material layer (24) between the anode current collector (21) and the first anode active material layer (22) and/or between the anode current collector (21) and the solid electrolyte layer (30),
wherein the second anode active material layer (24) is a metal layer, the metal layer comprising lithium and/or a lithium alloy.

13. The all-solid secondary battery (1) as claimed in any of the claims 9 to 12

wherein the solid electrolyte layer (30) further comprises a solid electrolyte, a gel electrolyte, or a combination thereof,
wherein the solid electrolyte comprises an oxide-based solid electrolyte, a polymer solid electrolyte, or a combination thereof, and
the gel electrolyte comprises a polymer gel electrolyte.

14. The all-solid secondary battery (1) as claimed in any of the claims 9 to 13,

wherein the cathode (10) comprises a cathode current collector (11), and the anode (20) comprises an anode current collector (21),
wherein at least one selected from the cathode current collector (11) and the anode current collector (21) comprises a base film and a metal layer on one or both surfaces of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof.

15. A method of manufacturing a solid electrolyte separator, the method comprising:

providing a composite of $Li_2S$ and a lithium salt;
providing a sulfide-based solid electrolyte;
mixing together the sulfide-based solid electrolyte and the composite of $Li_2S$ and the lithium salt to prepare a mixture; and
molding the mixture to prepare a solid electrolyte separator,
wherein the composite of $Li_2S$ and the lithium salt is represented by $Li_2S-Li_aX_b$ where $1 \leq a \leq 5$ and $1 \leq b \leq 5$, and X is I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCl, $NCl_2$, $BN_2$, or a combination thereof.

**Patentansprüche**

1. Festelektrolyt-Separator, aufweisend:

einen Verbundstoff aus $Li_2S$ und einem Lithiumsalz; und
einen Festelektrolyten auf Sulfidbasis,
wobei der Verbundstoff aus $Li_2S$ und dem Lithiumsalz durch $Li_2S-Li_aX_b$ dargestellt ist, wobei $1 \leq a \leq 5$ und $1 \leq b \leq 5$ ist, und
X I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCl, $NCl_2$, $BN_2$ oder eine Kombination davon ist.

2. Festelektrolyt-Separator nach Anspruch 1, wobei das Lithiumsalz eine binäre Verbindung und/oder eine ternäre Verbindung aufweist,

wobei die binäre Verbindung LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$ oder eine Kombination davon aufweist, und
die ternäre Verbindung $Li_3OCl$, $LiPF_6$, $LiBF_4$, $LiSbF_6$, $LiAsF_6$, $LiClO_4$, $LiAlO_4$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$ oder eine Kombination davon aufweist.

3. Festelektrolyt-Separator nach Anspruch 1, wobei der Verbundstoff eine feste Lösung aus $Li_2S$ und dem Lithiumsalz aufweist und die Größe der $Li_2S$-Kristallite, die aus einem XRD-Spektrum des Verbundstoffs ermittelt wurde, 20 nm oder weniger beträgt und/oder in dem Verbundstoff die Menge an $Li_2S$ größer ist als die Menge an Lithiumsalz, und wobei das Molverhältnis von $Li_2S$ zu dem Lithiumsalz in einem Bereich von etwa 51:49 bis etwa 95:5 liegt.

4. Festelektrolyt-Separator nach einem der Ansprüche 1 bis 3, wobei der Verbundstoff eine geringere Mohs-Härte als das Lithiumsalz aufweist,
wobei die Mohs-Härte des Verbundstoffs kleiner als 2 ist.

5. Festelektrolyt-Separator nach einem der Ansprüche 1 bis 4, wobei die Menge des Verbundmaterials in einem Bereich von etwa 0,1 Gew.-% bis etwa 20 Gew.-%, bezogen auf das Gesamtgewicht des Verbundstoffs und des Festelektrolyten auf Sulfidbasis, liegt.

**6.** Festelektrolyt-Separator nach einem der Ansprüche 1 bis 5,

wobei der Festelektrolyt-Separator Verbundstoffpartikel und eine Vielzahl von Festelektrolytpartikeln auf Sulfidbasis aufweist, wobei die Größen der Partikel unter Verwendung des in der Beschreibung angegebenen Verfahrens gemessen werden,
wobei die Verbundstoffpartikel eine kleinere Größe als die Festelektrolytpartikel auf Sulfidbasis aufweisen, und die Verbundstoffpartikel in Poren zwischen der Vielzahl von Festelektrolytpartikeln auf Sulfidbasis vorgesehen sind,
wobei der Festelektrolyt-Separator vorzugsweise eine Porosität von 8% oder weniger aufweist, und/oder
die Festelektrolytpartikel auf Sulfidbasis eine Größe von etwa 1 $\mu$m bis etwa 10 $\mu$m aufweisen,
die Verbundstoffpartikel eine Größe von 2 $\mu$m oder weniger aufweisen, und
das Verhältnis der Größe der Festelektrolytpartikel auf Sulfidbasis zur Größe der Verbundstoffpartikel in einem Bereich von etwa 2:1 bis etwa 200:1 liegt.

**7.** Festelektrolyt-Separator nach einem der Ansprüche 1 bis 6,

wobei der Festelektrolyt auf Sulfidbasis mindestens eine Verbindung aufweist, die ausgewählt ist aus $Li_2S$-$P_2S_5$, $Li_2S$-$P_2S_5$-LiX, wobei X ein Halogenelement ist, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$, wobei m und n positive Zahlen sind und Z Ge, Zn oder Ga ist, $Li_2S$-$GeS_2$, $Li_2S$-$SiS_2$-$Li_3PO_4$, $Li_2S$-$SiS_2$-$Li_pMO_q$, wobei p und q positive Zahlen sind und M ein Element ist, das ausgewählt ist aus P, Si, Ge, B, Al, Ga und In, $Li_{7-x}PS_{6-x}Cl_x$, wobei $0 \leq x \leq 2$, $Li_{7-x}PS_{6-x}Cl_x$, wobei $0 \leq x \leq 2$, $Li_{7-x}PS_{6-x}Br_x$, wobei $0 \leq x \leq 2$, und
der Festelektrolyt auf Sulfidbasis einen Festelektrolyten vom Argyrodit-Typ aufweist, wobei der Festelektrolyt vom Argyrodit-Typ mindestens eine Verbindung aufweist, die ausgewählt ist aus $Li_6PS_5Cl$, $Li_6PS_5Br$ und $Li_6PS_5I$, und
der Festelektrolyt vom Argyrodit-Typ eine Dichte von etwa 1,5 g/cm$^3$ bis etwa 2,0 g/cm$^3$ aufweist.

**8.** Festelektrolyt-Separator nach einem der Ansprüche 1 bis 7, wobei

der Festelektrolyt-Separator ferner ein Bindemittel aufweist,
der Festelektrolyt-Separator frei von einem leitfähigen Material auf Kohlenstoffbasis ist,
der Festelektrolyt-Separator eine selbsttragende Folie ist und
der Festelektrolyt-Separator eine Krümmung von mehr als 0 aufweist.

**9.** Festkörper-Sekundärbatterie (1), aufweisend:

eine Kathode (10); eine Anode (20); und eine Festelektrolytschicht (30) zwischen der Kathode (10) und der Anode (20),
wobei die Festelektrolytschicht (30) den Festelektrolyt-Separator nach Anspruch 1 aufweist.

**10.** Festkörper-Sekundärbatterie (1) nach Anspruch 9,

wobei die Kathode (10) ein aktives Kathodenmaterial aufweist,
wobei das aktive Kathodenmaterial ein aktives Kathodenmaterial auf Sulfidbasis, ein aktives Kathodenmaterial auf Oxidbasis oder eine Kombination davon aufweist,
wobei das aktive Kathodenmaterial auf Sulfidbasis Nickelsulfid, Kupfersulfid, $Li_2S$, einen $Li_2S$-haltigen Verbundstoff oder eine Kombination davon aufweist, und
das aktive Kathodenmaterial auf Oxidbasis ein Lithium-Übergangsmetalloxid, ein Metalloxid oder eine Kombination davon aufweist, wobei das Lithium-Übergangsmetalloxid Lithium-Kobalt-Oxid, Lithium-Nickel-Oxid, Lithium-Nickel-Kobalt-Oxid, Lithium-Nickel-Kobalt-Aluminium-Oxid, Lithium-Nickel-Kobalt-Mangan-Oxid, Lithiummanganat, Lithium-Eisen-Phosphat oder eine Kombination davon aufweist, und das Metalloxid Eisenoxid, Vanadiumoxid oder eine Kombination davon aufweist.

**11.** Festkörper-Sekundärbatterie (1) nach Anspruch 9 oder 10, wobei die Anode (20) einen Anodenstromkollektor (21) und eine erste aktive Anodenmaterialschicht (22) auf einer Oberfläche des Anodenstromkollektors (21) aufweist, wobei vorzugsweise die erste aktive Anodenmaterialschicht (22) eine Metallschicht ist, wobei die Metallschicht Lithium und/oder eine Lithiumlegierung aufweist, oder

die erste aktive Anodenmaterialschicht (22) ein aktives Anodenmaterial und ein Bindemittel aufweist, wobei das aktive Anodenmaterial eine Partikelform und einen durchschnittlichen Partikeldurchmesser von 4 μm oder weniger aufweist, wobei sich der durchschnittliche Partikeldurchmesser auf das kumulative Volumen von 50% bezieht, berechnet aus Partikeln mit der kleinsten Partikelgröße in der durch ein Laserbeugungsverfahren gemessenen Partikelgrößenverteilung,

wobei das aktive Anodenmaterial vorzugsweise mindestens ein Material aufweist, das ausgewählt ist aus einem aktiven Anodenmaterial auf Kohlenstoffbasis und einem Metall und/oder einem aktiven Anodenmaterial aus einem Halbmetall,

wobei das aktive Anodenmaterial auf Kohlenstoffbasis amorphen Kohlenstoff, kristallinen Kohlenstoff, porösen Kohlenstoff oder eine Kombination davon aufweist, und

das aktive Anodenmaterial aus Metall und/oder Halbmetall Gold (Au), Platin (Pt), Palladium (Pd), Silizium (Si), Silber (Ag), Aluminium (Al), Wismut (Bi), Zinn (Sn), Zink (Zn) oder eine Kombination davon aufweist, und

das aktive Anodenmaterial eine Mischung aus Primärpartikeln, bestehend aus amorphem Kohlenstoff, und Sekundärpartikeln, bestehend aus einem Metall und/oder einem Halbmetall, aufweist,

wobei der Anteil der Sekundärpartikel im Bereich von etwa 1 Gew.-% bis etwa 60 Gew.-%, bezogen auf das Gesamtgewicht der Mischung, liegt.

12. Festkörper-Sekundärbatterie (1) nach einem der Ansprüche 9 bis 11, ferner aufweisend eine zweite aktive Anodenmaterialschicht (24) zwischen dem Anodenstromkollektor (21) und der ersten aktiven Anodenmaterialschicht (22) und/oder zwischen dem Anodenstromkollektor (21) und der Festelektrolytschicht (30),

wobei die zweite aktive Anodenmaterialschicht (24) eine Metallschicht ist, wobei die Metallschicht Lithium und/oder eine Lithiumlegierung aufweist.

13. Festkörper-Sekundärbatterie (1) nach einem der Ansprüche 9 bis 12,

wobei die Festelektrolytschicht (30) ferner einen Festelektrolyten, einen Gelelektrolyten oder eine Kombination davon aufweist,

wobei der Festelektrolyt einen Festelektrolyten auf Oxidbasis, einen Polymer-Festelektrolyten oder eine Kombination davon aufweist, und

der Gelelektrolyt einen Polymer-Gelelektrolyten aufweist.

14. Festkörper-Sekundärbatterie (1) nach einem der Ansprüche 9 bis 13,

wobei die Kathode (10) einen Kathodenstromkollektor (11) aufweist und die Anode (20) einen Anodenstromkollektor (21) aufweist,

wobei mindestens eine Komponente unter dem Kathodenstromkollektor (11) und dem Anodenstromkollektor (21) eine Basisfolie und eine Metallschicht auf einer oder beiden Oberflächen der Basisfolie aufweist,

wobei die Basisfolie ein Polymer aufweist, wobei das Polymer Polyethylenterephthalat (PET), Polyethylen (PE), Polypropylen (PP), Polybutylenterephthalat (PBT), Polyimid (PI) oder eine Kombination davon aufweist, und

die Metallschicht Indium (In), Kupfer (Cu), Magnesium (Mg), Edelstahl, Titan (Ti), Eisen (Fe), Kobalt (Co), Nickel (Ni), Zink (Zn), Aluminium (Al), Germanium (Ge), Lithium (Li) und/oder eine Legierung davon aufweist.

15. Verfahren zum Herstellen eines Festelektrolyt-Separators, wobei das Verfahren aufweist:

Bereitstellen eines Verbundstoffs aus $Li_2S$ und einem Lithiumsalz;
Bereitstellen eines Festelektrolyten auf Sulfidbasis;
Mischen des Festelektrolyten auf Sulfidbasis und des Verbundstoffs aus $Li_2S$ und dem Lithiumsalz, um eine Mischung herzustellen; und
Formen der Mischung zum Herstellen eines Festelektrolyt-Separators,
wobei der Verbundstoff aus $Li_2S$ und dem Lithiumsalz durch $Li_2S\text{-}Li_aX_b$ dargestellt ist, wobei $1 \leq a \leq 5$ und $1 \leq b \leq 5$ ist, und
X I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCl, $NCl_2$, $BN_2$ oder eine Kombination davon ist.

**Revendications**

1. Un séparateur d'électrolyte solide comprenant :

un composite de $Li_2S$ et d'un sel de lithium ; et
un électrolyte solide à base de sulfure,
dans lequel le composite de $Li_2S$ et du sel de lithium est représenté par $Li_2S$-$Li_aX_b$ où $1 \leq a \leq 5$ et $1 \leq b \leq 5$, et
X est I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCl, $NCl_2$, $BN_2$, ou une combinaison de ceux-ci.

2. Le séparateur d'électrolyte solide selon la revendication 1, dans lequel le sel de lithium comprend un composé binaire et/ou un composé ternaire,

dans lequel le composé binaire comprend LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, ou une combinaison de ceux-ci, et
le composé ternaire comprend $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, ou une combinaison de ceux-ci.

3. Le séparateur d'électrolyte solide selon la revendication 1, dans lequel le composite comprend une solution solide de $Li_2S$ et du sel de lithium, et une taille des cristallites de $Li_2S$ obtenue à partir d'un spectre XRD du composite est de 20 nm ou moins et/ou dans le composite, une quantité de $Li_2S$ est supérieure à une quantité du sel de lithium, et un rapport molaire de $Li_2S$ au sel de lithium est compris entre environ 51:49 et environ 95:5.

4. Le séparateur d'électrolyte solide selon l'une quelconque des revendications 1 à 3,

dans lequel le composite présente une dureté de Mohs plus faible que celle du sel de lithium,
dans lequel la dureté de Mohs du composite est inférieure à 2.

5. Le séparateur d'électrolyte solide selon l'une quelconque des revendications 1 à 4, dans lequel une quantité du composite est comprise entre environ 0,1 % en poids et environ 20 % en poids par rapport au poids total du composite et de l'électrolyte solide à base de sulfure.

6. Le séparateur d'électrolyte solide selon l'une quelconque des revendications 1 à 5,

dans lequel le séparateur d'électrolyte solide comprend des particules de composite et
une pluralité de particules d'électrolyte solide à base de sulfure, dans lequel les tailles desdites particules sont mesurées selon la méthode indiquée dans la description,
dans lequel les particules de composite présentent une taille plus petite que celle des particules d'électrolyte solide à base de sulfure, et
les particules de composite sont disposées dans des pores entre la pluralité de particules d'électrolyte solide à base de sulfure,
de sorte que, préférablement, le séparateur d'électrolyte solide présente une porosité de 8 % ou moins et/ou les particules d'électrolyte solide à base de sulfure présentent une taille d'environ 1 $\mu$m à environ 10 $\mu$m,
les particules de composite présentent une taille de 2 $\mu$m ou moins, et
un rapport entre la taille des particules d'électrolyte solide à base de sulfure et celle des particules de composite est compris entre environ 2:1 et environ 200:1.

7. Le séparateur d'électrolyte solide selon l'une quelconque des revendications 1 à 6,

dans lequel l'électrolyte solide à base de sulfure comprend au moins un composé sélectionné parmi $Li_2S$-$P_2S_5$, $Li_2S$-$P_2S_5$-LiX où X est un élément halogène, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ où m et n sont des nombres positifs et Z est Ge, Zn, ou Ga, $Li_2S$-$GeS_2$, $Li_2S$-$SiS_2$-$Li_3PO_4$, $Li_2S$-$SiS_2$-$Li_pMO_q$ où p et q sont des nombres positifs et M est sélectionné parmi P, Si, Ge, B, Al, Ga, et In, $Li_{7-x}PS_{6-x}Cl_x$ où $0 \leq x \leq 2$, $Li_{7-x}PS_{6-x}Br_x$ où $0 \leq x \leq 2$, et $Li_{7-x}PS_{6-x}I_x$ où $0 \leq x \leq 2$, et
dans lequel l'électrolyte solide à base de sulfure comprend un électrolyte solide de type argyrodite,
dans lequel l'électrolyte de type argyrodite comprend au moins un composé sélectionné parmi $Li_6PS_5Cl$, $Li_6PS_5Br$, et $Li_6PS_5I$, et
l'électrolyte solide de type argyrodite présente une densité comprise entre environ 1,5 g/cc et environ 2,0 g/cc.

8. Le séparateur d'électrolyte solide selon l'une quelconque des revendications 1 à 7,

dans lequel le séparateur d'électrolyte solide comprend en outre un liant,
le séparateur d'électrolyte solide est exempt de matériau conducteur à base de carbone,
le séparateur d'électrolyte solide est un film autoportant, et
le séparateur d'électrolyte solide présente une courbure supérieure à 0.

9. Une batterie secondaire tout-solide (1) comprenant :

une cathode (10) ; une anode (20) ; et une couche d'électrolyte solide (30) entre la cathode (10) et l'anode (20),
dans laquelle la couche d'électrolyte solide (30) comprend le séparateur d'électrolyte solide selon la revendication 1.

10. La batterie secondaire tout-solide (1) selon la revendication 9,

dans laquelle la cathode (10) comprend un matériau actif de cathode,
dans laquelle le matériau actif de cathode comprend un matériau actif de cathode à base de sulfure, un matériau actif de cathode à base d'oxyde, ou une combinaison de ceux-ci,
dans laquelle le matériau actif de cathode à base de sulfure comprend un sulfure de nickel, un sulfure de cuivre, $Li_2S$, un composite contenant $Li_2S$, ou une combinaison de ceux-ci, et
le matériau actif de cathode à base d'oxyde comprend un oxyde de métal de transition et de lithium, un oxyde métallique, ou une combinaison de ceux-ci, l'oxyde de métal de transition et de lithium comprenant l'oxyde de cobalt et de lithium, l'oxyde de nickel et de lithium, l'oxyde de nickel, de cobalt et de lithium, l'oxyde de nickel, de cobalt, d'aluminium et de lithium, l'oxyde de nickel, de cobalt, de manganèse et de lithium, le manganate de lithium, le phosphate de fer et de lithium, ou une combinaison de ceux-ci, et l'oxyde métallique comprenant l'oxyde de fer, l'oxyde de vanadium, ou une combinaison de ceux-ci.

11. La batterie secondaire tout-solide (1) selon la revendication 9 ou 10, dans laquelle

l'anode (20) comprend un collecteur de courant d'anode (21) et une première couche de matériau actif d'anode (22) sur une surface du collecteur de courant d'anode (21), de sorte que, préférablement, la première couche de matériau actif d'anode (22) est une couche métallique, la couche métallique comprenant du lithium et/ou un alliage de lithium, ou
la première couche de matériau actif d'anode (22) comprend un matériau actif d'anode et un liant, le matériau actif d'anode étant sous forme particulaire et présentant un diamètre moyen de particule de 4 $\mu$m ou moins, dans lequel ledit diamètre moyen de particule se réfère au volume cumulatif de 50 % calculé à partir des particules présentant la plus petite taille dans la distribution granulométrique mesurée par une méthode de diffraction laser ;
de sorte que, préférablement, le matériau actif d'anode comprend au moins un composé sélectionné parmi un matériau actif d'anode à base de carbone et un matériau actif d'anode métallique et/ou métalloïde,
dans lequel le matériau actif d'anode à base de carbone comprend du carbone amorphe, du carbone cristallin, du carbone poreux, ou une combinaison de ceux-ci, et
le matériau actif d'anode métallique et/ou métalloïde comprend de l'or (Au), du platine (Pt), du palladium (Pd), du silicium (Si), de l'argent (Ag), de l'aluminium (Al), du bismuth (Bi), de l'étain (Sn), du zinc (Zn), ou une combinaison de ceux-ci, et
le matériau actif d'anode comprend un mélange de particules primaires constitué de carbone amorphe et de particules secondaires constituées d'un métal et/ou d'un métalloïde,
dans lequel une quantité des particules secondaires est comprise entre environ 1 % en poids et environ 60 % en poids par rapport au poids total du mélange.

12. La batterie secondaire tout-solide (1) selon l'une quelconque des revendications 9 à 11, comprenant en outre une deuxième couche de matériau actif d'anode (24) entre le collecteur de courant d'anode (21) et la première couche de matériau actif d'anode (22) et/ou entre le collecteur de courant d'anode (21) et la couche d'électrolyte solide (30), dans laquelle la deuxième couche de matériau actif d'anode (24) est une couche métallique, la couche métallique comprenant du lithium et/ou un alliage de lithium.

13. La batterie secondaire tout-solide (1) selon l'une quelconque des revendications 9 à 12,

dans laquelle la couche d'électrolyte solide (30) comprend en outre un électrolyte solide, un électrolyte gel, ou une combinaison de ceux-ci,
dans laquelle l'électrolyte solide comprend un électrolyte solide à base d'oxyde, un électrolyte solide polymère, ou une combinaison de ceux-ci, et
l'électrolyte gel comprend un électrolyte gel polymère.

14. La batterie secondaire tout-solide (1) selon l'une quelconque des revendications 9 à 13,

dans laquelle la cathode (10) comprend un collecteur de courant de cathode (11), et l'anode (20) comprend un collecteur de courant d'anode (21),
dans lequel au moins un élément sélectionné parmi le collecteur de courant de cathode (11) et le collecteur de courant d'anode (21) comprend un film de base et une couche métallique sur une ou deux surfaces du film de base,
dans lequel le film de base comprend un polymère, le polymère comprenant le polyéthylène téréphtalate (PET), le polyéthylène (PE), le polypropylène (PP), le polybutylène téréphtalate (PBT), le polyimide (PI), ou une combinaison de ceux-ci, et
la couche métallique comprend de l'indium (In), du cuivre (Cu), du magnésium (Mg), de l'acier inoxydable, du titane (Ti), du fer (Fe), du cobalt (Co), du nickel (Ni), du zinc (Zn), de l'aluminium (Al), du germanium (Ge), du lithium (Li), et/ou un alliage de ceux-ci.

15. Un procédé de fabrication d'un séparateur d'électrolyte solide, le procédé comprenant :

fournir un composite de $Li_2S$ et d'un sel de lithium ;
fournir un électrolyte solide à base de sulfure ;
mélanger ensemble l'électrolyte solide à base de sulfure et le composite de $Li_2S$ et du sel de lithium pour préparer un mélange ; et
mouler le mélange pour préparer un séparateur d'électrolyte solide,
dans lequel le composite de $Li_2S$ et du sel de lithium est représenté par $Li_2S\text{-}Li_aX_b$ où $1 \leq a \leq 5$ et $1 \leq b \leq 5$, et
X est I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, $NO_3$, $CO_3$, $BH_4$, $SO_4$, $BO_3$, $PO_4$, NCl, $NCl_2$, $BN_2$, ou une combinaison de ceux-ci.

# FIG. 1

# FIG. 2

# FIG. 3

# FIG. 4

# FIG. 5

<u>1</u>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230119611

- KR 1020160064942

**Non-patent literature cited in the description**

- **FUDONGHAN et al.** Suppressing Li Dendrite Formation in Li 2S-P2S5 Solid Electrolyte by Lil Incorporation. *ADVANCED ENERGY MATERIALS*, vol. 8 (18), 1703644
- **YU CHUANG et al.** Superionic conductivity in lithium argyrodite solid-state electrolyte by controlled CI-doping. *NANO ENERGY*, 01 March 2020, vol. 69, 104396
- **TAKAHASHI MASAKUNI et al.** Investigation of the Suppression of Dendritic Lithium Growth with a Lithium-Iodide-Containing Solid Electrolyte. *CHEMISTRY OF MATERIALS*, vol. 33 (13), 4907-4914

- **FUJITA YUSHI et al.** Li 2S-Lil Solid Solutions with Ionic Conductive Domains for Enhanced All-Solid-State Li/S Batteries. *ACS APPLIED ENERGY MATERIALS*, 02 August 2022, vol. 5 (8), 9429-9436
- Li 2S-Based Solid Solutions as Positive Electrodes with Full Utilization and Superlong Cycle Life in All-Solid-State Li/S Batteries. **TAKASHI HAKARI et al.** ADVANCED SUSTAINABLE SYSTEMS. WILEY, vol. 1, 1700017